# EUROPÄISCHE PATENTSCHRIFT

(11) **EP 3 555 495 B1**
(45) Veröffentlichungstag und Bekanntmachung des Hinweises auf die Patenterteilung: **14.08.2024**
(21) Anmeldenummer: 17821535.6
(22) Anmeldetag: 13.12.2017
(51) Int. Cl.: F16D 65/097

(54) **SCHEIBENBREMSE FÜR EIN NUTZFAHRZEUG UND BREMSBELAGSATZ**
DISC BRAKE FOR A UTILITY VEHICLE, AND BRAKE PAD SET
FREIN À DISQUE POUR UN VÉHICULE UTILITAIRE ET JEU DE GARNITURES DE FREIN

(30) Priorität: 14.12.2016 DE 102016124310
(43) Veröffentlichungstag der Anmeldung: 23.10.2019
(73) Patentinhaber: KNORR-BREMSE Systeme für Nutzfahrzeuge GmbH, 80809 München (DE)
(72) Erfinder: BRANDL, Christian, 94447 Plattling (DE); HIDRINGER, Michael, 94544 Hofkirchen (DE); PLEINTINGER, Martin, 94428 Eichendorf (DE); NESMJANOWITSCH, Igor, 94491 Hengersberg (DE); FRICKE, Jens, 94474 Vilshofen (DE); MOLNAR, Markus, 94081 Fürstenzell (DE)
(86) Internationale Anmeldenummer: PCT/EP2017/082629
(87) Internationale Veröffentlichungsnummer: WO 2018/109012

(56) Entgegenhaltungen:
- DE-A1- 102008 051 236
- DE-U1- 202016 102 686

## Beschreibung

Die Erfindung betrifft eine Scheibenbremse für ein Nutzfahrzeug nach dem Oberbegriff des Anspruchs 1. Die Erfindung bezieht sich auch auf einen Bremsbelagsatz.

Bei einer gattungsgemäßen, auch als Schiebesattel-Bremse bekannten Scheibenbremse wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Nach einem Lösen der Bremse verbleibt bei der bekannten Scheibenbremse der Bremssattel in dieser Position, in der die Bremsbeläge, zumindest aber der reaktionsseitige Bremsbelag zwar drucklos, jedoch schleifend an der Bremsscheibe anliegt. Die dadurch im Fahrbetrieb auftretenden Restschleifmomente der Bremsbeläge wirken sich insofern nachteilig aus als sie zu einem erhöhten Kraftstoffverbrauch führen ebenso wie zu einer Verringerung der Standzeit der beteiligten Bauteile, nämlich der Bremsscheibe und der Bremsbeläge.

Zwar erfolgt ein geringes Lösen der Bremsbeläge im Fahrbetrieb beispielsweise durch einen Taumelschlag der Bremsscheibe sowie durch Erschütterungen und Querbeschleunigungen bei Kurvenfahrten. Diese Effekte sind jedoch nicht ausreichend, um die genannten Restschleifmomente wirksam zu verhindern.

Um diesem Problem zu begegnen, ist in der gattungsgemäßen DE 10 2007 001 213 eine Scheibenbremse offenbart mit einer Rückstelleinrichtung, die in einem der Führungsholme, über die der Bremssattel verschiebbar am Bremsträger gehalten ist, angeordnet ist und die ein federndes Rückstellelement aufweist, durch das der Bremssattel in eine Ausgangsstellung verschoben wird.

Prinzipiell hat sich diese Konstruktion bewährt. Jedoch kann der Einsatz dieser bekannten Rückstelleinrichtung bei druckluftbetätigten Scheibenbremsen schwerer Nutzfahrzeuge zu Problemen führen, da hier weite Grenzen variabler Einflüsse durch Bauteiltoleranzen und Bauteildeformationen wirksam sind, die eine sichere Funktion dieser Rückstelleinrichtung nicht in jedem Fall zulassen.

Vergleichbare Probleme ergeben sich bei einer Scheibenbremse wie sie in der DE 10 2012 006 111 A1 thematisiert ist. Dabei ist eine Rückstelleinrichtung auf der der Zuspanneinrichtung gegenüberliegenden, dem reaktionsseitigen Bremsbelag zugewandten Seite angeordnet, wodurch eine wirksame, insbesondere automatische Rückstellung des Bremssattels erreicht wird, bei gleichzeitig minimalstem Eingriff in die Systemsteifigkeit.

In jedem Fall wirkt die Rückstelleinrichtung auf den Bremssattel, wobei der Bremsträger als Widerlager fungiert.

Die DE 43 01 621 A1 beschreibt eine Schwimmsattel-Scheibenbremse mit einem ortsfesten Bremsträger, der zwei über den äußeren Rand einer Bremsscheibe ragende Trägerarme aufweist, mit beiderseits der Bremsscheibe angeordneten, je einen Reibbelag und eine Rückenplatte aufweisenden Bremsbacken, die an den Trägerarmen verschiebbar abgestützt sind, mit einem am Bremsträger axial verschiebbar geführten Schwimmsattel, der die Bremsbacken umgreift und einen zum Andruck der Bremsbacken an die Bremsscheibe bestimmte Betätigungsvorrichtung aufweist, mit einer auf die Bremsbacken axial in Bremslöserichtung einwirkenden Federanordnung, die nach dem Bremsen das Einstellen eines Lüftspiels zwischen Bremsbacken und Bremsscheibe unterstützt. Die Federanordnung weist zumindest eine Spreizfeder auf, die an einem Trägerarm des Bremsträgers in axialer Richtung insgesamt unverschiebbar befestigt ist, dass die Befestigung an einem über dem äußeren Rand der Bremsscheibe befindlichen Abschnitt des Trägerarms erfolgt, und dass die Spreizfeder zumindest zwei Federarme aufweist, die an den Rückplatten der Bremsbacken in axialer Richtung federnd anliegen.

Die US2014/0339026 A1 beschreibt eine Spreizfeder, umfassend einen Verriegelungsarm, der die Spreizfeder mit einem Bremskomponente verbindet, einen Rückzugarm; und eine Vorspanneinrichtung, die zwischen dem Verriegelungsarm und dem Rückholarm angeordnet ist, wobei die Vorspannvorrichtung sechs spiralförmige Schleifen oder mehr umfasst, die Energie während einer Bremsenaktivierung speichern und sobald der Bremsvorgang abgeschlossen ist, die Bremskomponenten (Bremsbelag) zurückziehen. Es wird ein Bremssattel in Form eines Faustsattels, welcher kein Schiebesattel ist, angegeben. Dieser ist für ein Personenfahrzeug geeignet, jedoch nicht für ein Nutzfahrzeug.

Die DE 20 2016 102686 U1 und die DE 10 2008 051236 A1 offenbaren Scheibenbremsen mit Belaghaltefederanordnungen.

Der Erfindung liegt die Aufgabe zugrunde, eine Scheibenbremse der gattungsgemäßen Art so weiterzuentwickeln, dass mit konstruktiv einfachsten und kostengünstigen Mitteln die Standzeit insbesondere der Bremsbeläge und der Bremsscheibe erhöht und die Betriebskosten insgesamt gesenkt werden.

Eine weitere Aufgabe besteht darin, einen entsprechenden Bremsbelagsatz bereitzustellen.

Diese Aufgabe wird durch eine Scheibenbremse mit den Merkmalen des Anspruchs 1 gelöst.

Die weitere Aufgabe wird durch einen Bremsbelagsatz mit den Merkmalen des Anspruchs 19 gelöst.

Eine Scheibenbremse für ein Nutzfahrzeug, mit einem eine Bremsscheibe übergreifenden, als Schiebesattel ausgebildeten Bremssattel, der an einem ortsfesten Bremsträger befestigt ist und eine zentrale Öffnung über der Bremsscheibe aufweist, umfasst zwei im Bremssattel angeordnete, gegensinnig bewegbare, jeweils eine Belagträgerplatte und einen darauf befestigten Reibbelag aufweisende Bremsbeläge, von denen ein aktionsseitiger mittels einer Zuspanneinrichtung über mindestens einen Bremsstempel gegen die Bremsscheibe pressbar ist, sowie mindestens einer Spreizeinrichtung, mit welcher der Bremssattel nach einem bremsbedingten Verschieben und Lösen der Bremse rückführbar ist, wobei die Spreizeinrichtung an den sich gegenüberliegenden Bremsbelägen angreifende federnden Federeinheiten aufweist, wobei die Spreizeinrichtung in der zentralen Öffnung angeordnet ist und die Federeinheiten direkt oder indirekt außerhalb der Reibbeläge in mindestens zwei zur Mitte abständig zueinander angeordneten Anbindungsschnittstellen der Bremsbeläge angreifen. Die Federeinheiten sind mit einem ortsfesten Anbindungselement in mindestens einer Verbindungsschnittstelle mit mindestens einem Verbindungselement verbunden.

Erfindungsgemäß bildet das mindestens eine Verbindungselement eine um eine Längsachse eines Zentralabschnitts des Anbindungselementes verdrehbare Verbindung. Dies ist vorteilhaft zum Ausgleich von Bewegungen und Verschleiß.

Durch die erfindungsgemäße Ausgestaltung der Scheibenbremse wird eine synchrone Rückstellung beider Bremsbeläge sowie einer Rückstellung des Bremssattels bei gelöster Bremse erreicht, wobei die Synchronität sowohl die Rückstellkräfte wie auch die Rückstellwege betrifft. Dabei wirkt die Rückstellkraft entgegen der jeweiligen Zuspannrichtung der beiden Bremsbeläge, also beim reaktionsseitigen Bremsbelag zum Sattelrücken hin und beim aktionsseitigen Bremsbelag zum Sattelkopf hin, unter Spaltbildungen gegenüber der Bremsscheibe.

Um ein Restschleifmoment zu verhindern wird ein Federpaket eingesetzt, dass zum einen eine Anbindung an ein ortsfestes Bauteil (z.B. Bremsträger) besitzt und zum anderen über Federwirkung die Bremsbeläge von der Bremsscheibe wegdrückt.

Die dargelegten Konzepte umfassen verschiedene Ausführungsbeispiele einer Realisierung der Federarme aus Rundmaterial.

Durch das Verwenden von Rundmaterial anstatt Flachmaterial ergibt sich ein erheblicher Kostenvorteil, da zum einen die Werkzeugkosten geringer ausfallen und zum anderen kein Materialverschnitt vorliegt. Hinzu kommt, dass zusätzlich die Herstellbarkeit erheblich verbessert wird. Das Ausstanzen eines Flachmaterials aus Edelstahl ist bei Blechstärken ab 1,5 mm nur bedingt möglich und führt bereits zu erheblichem Werkzeugverschleiß. Da bei einer vergleichbaren Ausführung aus Flachmaterial Blechstärken über 1,5 mm nötig wären, bietet eine Runddrahtvariante demgegenüber erhebliche Vorteile.

Speziell stehen dabei die Anbindungsschnittstellen zu den Bremsbelägen und zum Bremsträger im Fokus. Dies ist der Fall, da die Formgebung des Rundmaterials anderen Einschränkungen unterliegt, als die eines Flachmaterials.

Der Angriff der Spreizeinrichtung an den beiden Bremsbelägen erfolgt zweckmäßigerweise an den Belagträgerplatten und zwar auf der dem daran befestigten Reibbelag zugewandten Seite oder an der gegenüberliegenden Rückenseite. Um ein Verkippen des jeweiligen Bremsbelages bei der Rückstellung zu vermeiden, kann das Spreizelement in der Mitte eines Reibradius' an den Belagrückenplatten angreifen.

Ein erfindungsgemäßer Bremsbelagsatz für die erfindungsgemäße Scheibenbremse weist mindestens zwei Bremsbeläge mit jeweils einer Belagträgerplatte und einem auf der Belagträgerplatte angebrachten Reibbelag und die oben angegebene Spreizeinrichtung auf.

Zur Kompensierung von zunehmendem Verschleiß des Reibmaterials weist die Anbindung der Federarme einen Freiheitsgrad auf. Dieser Freiheitsgrad dient dazu ein mehrachsiges Verspannen/ Verkippen des Systems zu verhindern.

Eine Ausführung umfasst ein Federpaket, bei dem die Anbindung der Federelemente verschiebbar ausgeführt ist. Die Kompensation des Reibmaterialverschleißes kann somit durch ein axiales Gleiten der Federanbindung zu einem ortsfesten Anbindungselement erfolgen.

Der Zusammenbau der kompletten Spreizeinheit, die auch als Zentriereinheit bezeichnet werden kann, wird dabei so ausgelegt, dass an der Verbindungsschnittstelle zwischen federndem Bauteil und Anbindungselement (ortsfestes Bauteil) ein bestimmtes Spiel vorgesehen ist. Durch dieses Spiel verschiebt sich beim fortschreitenden Zuspannen der Federn die Verbindungsschnittstelle in Richtung Mitte der Bremse (zum Belaghaltebügel hin).

Die Anbindung des Federelements kann beispielhaft über ein verpresstes Blechelement dargestellt werden, kann jedoch in seiner Ausführung variieren. Maßgebend ist dabei, dass ein Verschieben in axialer Richtung des Drahtbügels möglich ist

Ein Vorteil ist hierbei, dass die verschiebbare Schnittstelle nicht zwischen Materialien mit unterschiedlichen Eigenschaften vorliegt. Somit kann zum Beispiel die Zerstörungsgefahr der Belagrückenplatte aus weichem Gussmaterial abgemindert werden. Ebenfalls wird die Anbindungsmöglichkeit des Federelements an der Belagrückenplatte vereinfacht.

Die während der Fahrt auftretenden Vibrationen erleichtern ein Verschieben der Anbindungsschnittstelle, so dass auch bei Verschmutzung oder/und Korrosion von einer korrekten Funktionsweise ausgegangen werden kann Weitere vorteilhafte Ausbildungen der Erfindung sind in den Unteransprüchen gekennzeichnet.

Hierzu kann das mindestens eine Verbindungselement eine in Richtung einer Längsachse eines Zentralabschnitts des Anbindungselementes verschiebbare Verbindung bilden.

Ein weitere Ausführung sieht vor, dass das mindestens eine Verbindungselement bogenförmig nach unten geneigte Flügelabschnitte aufweist, in welche mindestens eine Federeinheit eingeklippst ist. Dies ist vorteilhaft für einen einfachen Aufbau wie auch eine einfache Montage.

In einer weiteren Ausführung kann das mindestens eine Verbindungselement mindestens einen Distanzabschnitt als eine in Längsrichtung eines Basisabschnitts des mindestens einen Verbindungselementes nach unten geneigte Lasche aufweist, wobei Seitenabschnitte des mindestens einen Distanzabschnitts mit einer Federeinheit in Kontakt stehen. Eine einfache Abstützung zu den Federarmen wird dadurch erreicht.

Es ist herstellungsmäßig von Vorteil, wenn das mindestens eine Verbindungselement ein metallisches Stanzbiegeteil ist.

Ein alternative Ausführung sieht vor, dass das mindestens eine Verbindungselement Windungen in einer Art Wicklung umfasst, wobei das Anbindungselement sich durch die Windungen erstreckt. Dies ergibt einen einfachen Aufbau. Besonders vorteilhaft ist es dabei, wenn die Windungen des mindestens einen Verbindungselementes Windungen von Abschnitten von Federarmen der Federeinheit sind, da auf diese Weise ein einfacher einstückiger Aufbau von Federarmen und Verbindungselement erzielt wird.

In einer Ausführung umfasst jede Federeinheit ein Paar von Federarmen, welche mit ihren inneren Enden, die zur Mitte der Öffnung weisen, verbunden sind. Dies ergibt einen kompakten Aufbau.

Es ist vorteilhaft, wenn das Paar von Federarmen einstückig ausgebildet ist, da so eine Teilezahl und Herstellungskosten verringert werden können.

Es ist weiterhin vorgesehen, dass die anderen Enden der Federarmeeines jeden Paars von Federarmen Anbindungsabschnitte aufweisen, welche in den Anbindungsschnittstellen der Bremsbeläge zusammenwirken. Dies ergibt einen einfachen Aufbau.

In einer Ausführung sind die Anbindungsschnittstellen an den Belagrückenplatten der Bremsbeläge angeordnet.

Dabei weisen die Anbindungsschnittstellen in einer Ausführung Aufnahmeöffnungen auf, welche als Durchgangslöcher oder/und Sacklöcher ausgebildet sind.

Die Aufnahmeöffnungen können auch als Bohrungen oder/und Langlöcher ausgebildet sein.

In einer alternativen Ausführung können die Anbindungsschnittstellen Stifte aufweisen.

Eine andere Ausführung sieht vor, dass die Anbindungsschnittstellen Führungselemente aufweisen.

Die Anbindungsschnittstellen können in einer weiteren Ausführung Absätze mit oder ohne aufgebrachte Führungselemente aufweisen.

Eine weitere alternative Ausführung sieht vor, dass die Anbindungsschnittstellen indirekt an den Belagrückenplatten der Bremsbeläge an Belaghaltefedern angeordnet sind.

Es ist vorteilhaft, wenn die Federeinheiten und das ortsfeste Anbindungselement aus einem Drahtmaterial, insbesondere Edelstahl, beispielsweise mit einem kreisrunden Querschnitt ausgebildet sind. Dies kann die Herstellungs- und/oder Materialkosten reduzieren.

Ein Bremsbelagsatz einer oben beschriebenen Scheibenbremse weist einen zuspannseitigen Bremsbelag, einen rückenseitigen Bremsbelag und eine oben beschriebene Spreizeinrichtung auf.

In einer weiteren Ausführung weisen die Bremsbeläge jeweils mindestens eine Belaghaltefeder auf, welche an ihren Enden jeweils mit einer Fase versehen ist. Das ermöglicht eine vorteilhafte Montage- und Demontageerleichterung für die Spreizeinrichtung.

Eine noch weitere Ausführung sieht vor, dass die Aufnahmeöffnungen der Bremsträgerhörner jeweils mit einem Stopfen verschlossen sind, wenn eine Spreizeinrichtung nicht vorhanden oder ausgebaut ist. Dies ergibt einen vorteilhaften Schutz gegen Verschmutzung und Eindringen von Feuchtigkeit.

Hierbei weist der Stopfen einen Körper auf, welcher kegelförmig mit einem Griffabschnitt und einem Endabschnitt ausgebildet ist. Eine Kegelform ermöglicht eine einfache Abdichtung.

Wenn der Körper umlaufende Wülste aufweist, zwischen denen umlaufende Ausnehmungen angeordnet sind, wird eine Abdichtung der Aufnahmeöffnung verbessert. Hierzu können zumindest die Wülste elastisch ausgebildet sein. Die Wülste können auch lippenförmig gestaltet sein.

Für eine vorteilhaft einfache Handhabung des Stopfens ist der Griffabschnitt des Körpers mit einem Griff verbunden.

Ausführungsbeispiele der Erfindung werden nachfolgend anhand der beigefügten Zeichnungen beschrieben.

Es zeigen:
- Figur 1: einen Teilausschnitt einer erfindungsgemäßen Scheibenbremse mit einem ersten Ausführungsbeispiel einer erfindungsgemäßen Spreizeinrichtung in einer schematischen perspektivischen Draufsicht;
- Figur 2: eine vergrößerte schematische Perspektivansicht der Spreizeinrichtung nach Figur 1;
- Figur 3: eine vergrößerte schematische Perspektivansicht einer Verbindungsschnittstelle der Spreizeinrichtung nach Figur 1;
- Figuren 4-6: weitere schematische Perspektivdarstellungen der Spreizeinrichtung nach Figur 1 mit einer ersten Variante der Verbindungsschnittstelle;
- Figur 7: eine vergrößerte schematische Perspektivansicht der Variante der Verbindungsschnittstelle der Spreizeinrichtung nach Figuren 4-6;
- Figuren 8-9: vergrößerte schematische perspektivische Teildarstellungen der Spreizeinrichtung nach Figur 1 mit einer zweiten Variante der Verbindungsschnittstelle;
- Figur 10: eine vergrößerte schematische Perspektivansicht der zweiten Variante der Verbindungsschnittstelle der Spreizeinrichtung nach Figuren 8-9;
- Figur 11: eine vergrößerte schematische perspektivische Teildarstellung der Spreizeinrichtung nach Figur 1 mit einer dritten Variante der Verbindungsschnittstelle;
- Figur 12: eine vergrößerte schematische Perspektivansicht der dritten Variante der Verbindungsschnittstelle der Spreizeinrichtung nach Figur 11;
- Figuren 13-14: vergrößerte schematische perspektivische Teildarstellungen der Spreizeinrichtung nach Figur 1 mit einer vierten Variante der Verbindungsschnittstelle;
- Figuren 15-16: vergrößerte schematische Perspektivansichten einer ersten Variante der Spreizeinrichtung nach Figur 1 mit einer fünften Variante der Verbindungsschnittstelle;
- Figur 17: eine vergrößerte schematische Perspektivansicht einer Federarmeinheit der ersten Variante der Spreizeinrichtung nach Figuren 15-16;
- Figur 18: eine vergrößerte schematische Teilperspektivansicht einer zweiten Variante der Spreizeinrichtung nach Figur 1 mit einer sechsten Variante der Verbindungsschnittstelle;
- Figur 19: eine vergrößerte schematische Teilperspektivansicht einer dritten Variante der Spreizeinrichtung nach Figur 1 mit einer siebten Variante der Verbindungsschnittstelle;
- Figur 20: eine vergrößerte Perspektivansicht der siebten Variante der Verbindungsschnittstelle der dritten Variante der Spreizeinrichtung nach Figur 19;
- Figuren 21-22: Teilausschnitte der erfindungsgemäßen Scheibenbremse mit der erfindungsgemäßen Spreizeinrichtung nach Figur 1 mit einer achten Variante der Verbindungsschnittstelle;
- Figuren 23-24: die erfindungsgemäße Scheibenbremse nach Figuren 21-22 mit einer ersten Variante von Anbindungsschnittstellen;
- Figur 25: die erfindungsgemäße Scheibenbremse nach Figuren 21-22 mit einer zweiten Variante von Anbindungsschnittstellen;
- Figuren 26-27: die erfindungsgemäße Scheibenbremse nach Figuren 21-22 mit einer dritten Variante von Anbindungsschnittstellen;
- Figur 28: die erfindungsgemäße Scheibenbremse nach Figuren 21-22 mit einer dritten Variante von Anbindungsschnittstellen;
- Figur 29: die erfindungsgemäße Scheibenbremse nach Figuren 21-22 mit einer vierten Variante von Anbindungsschnittstellen;
- Figur 30: die erfindungsgemäße Scheibenbremse nach Figuren 21-22 mit einer fünften Variante von Anbindungsschnittstellen;
- Figur 31: die erfindungsgemäße Scheibenbremse nach Figuren 21-22 mit einer sechsten Variante von Anbindungsschnittstellen;
- Figur 32: die erfindungsgemäße Scheibenbremse nach Figuren 21-22 mit einer siebten Variante von Anbindungsschnittstellen;
- Figur 33: die erfindungsgemäße Scheibenbremse nach Figur 23 mit einer neunten Variante der Verbindungsschnittstelle;
- Figur 34: eine vergrößerte schematische Perspektivdarstellung der neunten Variante der Verbindungsschnittstelle nach Figur 33;
- Figuren 35-36: schematische Teilansichten der erfindungsgemäßen Scheibenbremse nach Figuren 26-27 mit einer vierten Variante der Spreizeinrichtung und der achten Variante der Verbindungsschnittstelle nach Figur 28;
- Figuren 37-38: vergrößerte schematische perspektivische Teildarstellungen der Spreizeinrichtung nach Figur 1 mit einer zehnten Variante der Verbindungsschnittstelle;
- Figur 39: eine vergrößerte schematische Perspektivansicht der zehnten Variante der Verbindungsschnittstelle der Spreizeinrichtung nach Figuren 37-38;
- Figur 40: eine schematische Perspektivansicht eines Bremsträgerhorns mit einer Aufnahmeöffnung und einem Stopfen;
- Figur 41: eine schematische Schnittansicht des Bremsträgerhorns mit eingesetztem Stopfen nach Figur 40; und
- Figur 42: eine vergrößerte schematische Perspektivansicht des Stopfens nach Figur 40 und 41.

Die Begriffe "oben", "unten", "links", "rechts" beziehen sich auf die jeweilige Anordnungen in den Figuren.

Eine "Oberseite" und eine "Unterseite" eines Bremsbelags 3, 3' bzw. einer Belagträgerplatte 4, 4' beziehen sich immer auf die Einbausituation des Bremsbelags 3, 3'.

Zur Unterscheidung von Bauteilen und Funktionsgruppen beiderseits einer Bremsscheibe 2 einer Scheibenbremse 10 sind die Bezugszeichen der Bauteile und Funktionsgruppen auf der Seite der Bremsscheibe 2, welche einem Sattelrücken 12 des Bremssattels 1 der Scheibenbremse 10 zugewandt ist, jeweils mit einem Apostroph versehen.

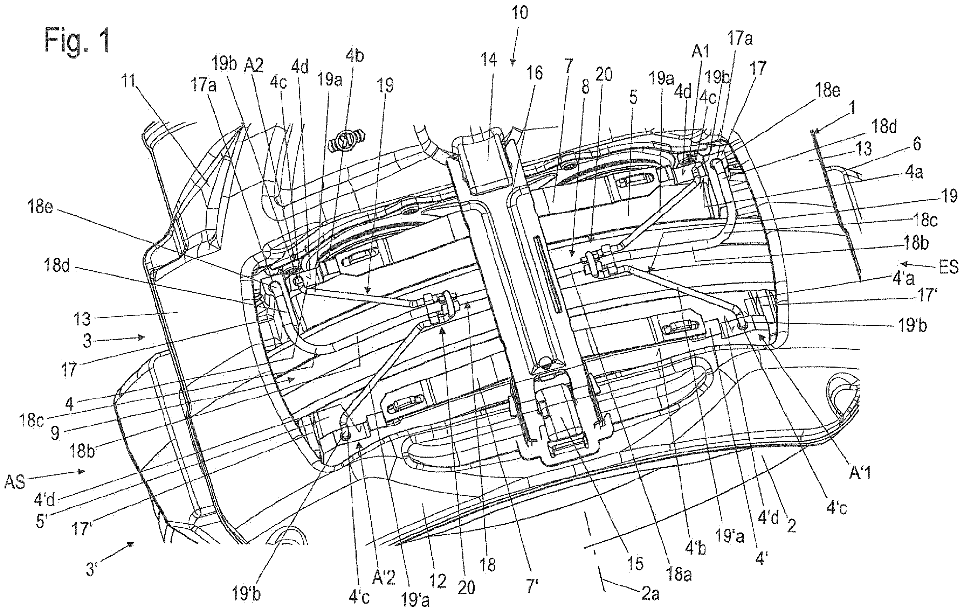

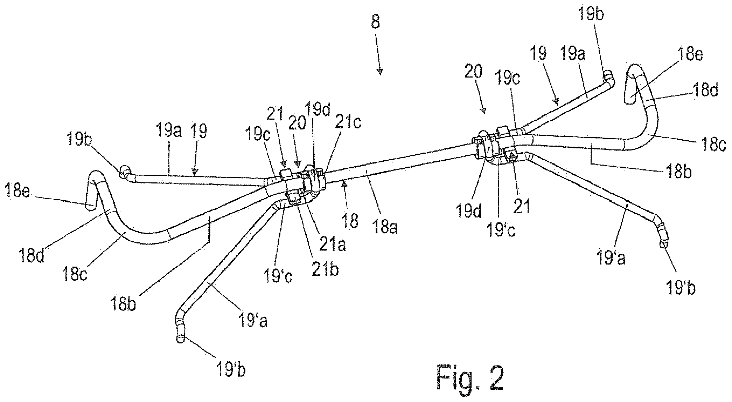

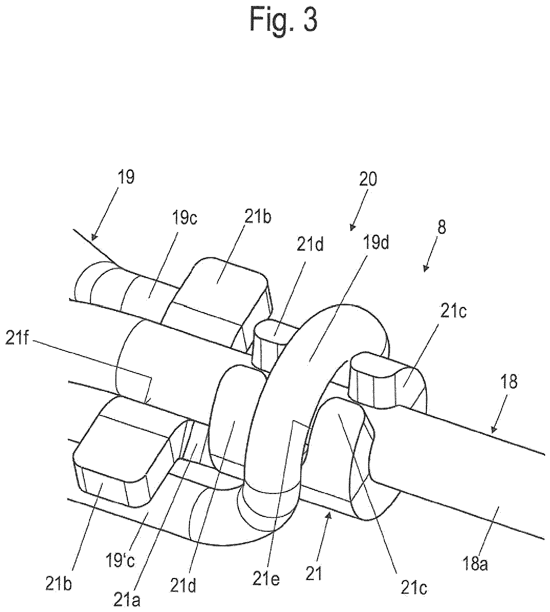

**Figur 1** zeigt einen Teilausschnitt einer erfindungsgemäßen Scheibenbremse 10 mit einem ersten Ausführungsbeispiel einer erfindungsgemäßen Spreizeinrichtung 8 in einer schematischen perspektivischen Draufsicht. In **Figur 2** ist eine vergrößerte schematische Perspektivansicht der Spreizeinrichtung 8 nach Figur 1 dargestellt. **Figur 3** stellt eine vergrößerte schematische Perspektivansicht einer Verbindungsschnittstelle 20 der Spreizeinrichtung 8 nach Figur 1 dar.

Ein Bremssattel 1 übergreift eine Bremsscheibe 2 mit einer Bremsscheibendrehachse 2a. Der Bremssattel 1 ist bezogen auf die Bremsscheibe 2 axial in Richtung der Bremsscheibendrehachse 2a verschiebbar an einem Bremsträger 6 angebracht, wozu der Bremssattel 1 auf nicht dargestellten Führungsholmen gelagert ist, die mit dem ortsfest am Fahrzeug gehaltenen Bremsträger 6 verbunden sind.

Der Bremssattel 1 umfasst einen Zuspannabschnitt 11, einen Sattelrücken 12 und zwei Zugstreben 13. Der Zuspannabschnitt 11 verläuft mit einer Seite parallel zu der Ebene der Bremsscheibe 2 auf einer Seite der Bremsscheibe 2. Auf der anderen Seite der Bremsscheibe 2 ist, ebenfalls parallel zu der Bremsscheibe 2 verlaufend, der Sattelrücken 12 angeordnet. Der Sattelrücken 12 ist mit dem Zuspannabschnitt 11 an jeweils einem Ende mit jeweils einer Zugstrebe 13 verbunden. Die Zugstreben 13 verlaufen dabei im Wesentlichen rechtwinklig zum Zuspannabschnitt 11 und zum Sattelrücken 12.

Der Zuspannabschnitt 11 weist einen Innenraum auf, in welchem eine nicht gezeigte Zuspanneinrichtung der Scheibenbremse 10 angeordnet ist.

Der Zuspannabschnitt 11, der Sattelrücken 12 und die Zugstreben 13 legen in dieser Anordnung eine zentrale Öffnung 9 zwischen sich fest, welche die Bremsscheibe 2 überspannt. Die Öffnung 9 weist eine gedachte Längsmittellinie auf, welche in der Ebene der Bremsscheibe 2 liegt und die gedachten Mitten der Zugstreben 13 verbindet. Außerdem weist die Öffnung 9 eine weitere gedachte Quermittellinie auf, welche eine gedachte Mitte des Zuspannabschnitts 11 eine gedachte Mitte des Sattelrückens 12 verbindet. Die Längsmittellinie und die Quermittellinie schneiden sich in einem gedachten Mittelpunkt, welcher hier als virtuelle Mitte der Öffnung 9 bezeichnet wird.

In dem Bremsträger 6 sind Bremsbeläge 3, 3' in den so genannten Belagschächten zwischen den jeweiligen zwei Bremsträgerhörnern 17, 17' angeordnet. Die Bremsbeläge 3, 3' sind im Fall einer Bremsung beidseitig an die Bremsscheibe 2 anpressbar. Dabei weist jeder Bremsbelag 3, 3' eine Belagträgerplatte 4, 4' und einen auf der der Bremsscheibe 2 zugewandten Seite daran befestigten Reibbelag 5, 5' auf einer Belagseite 4a auf, der in Funktion, also bei einer Bremsung, gegen die Bremsscheibe 2 gepresst ist. Die andere Seite der Belagträgerplatte 4, 4' wird im Weiteren als Druckseite 4b bezeichnet.

Die Bremsbeläge 3, 3' sind durch die zentrale Öffnung 9 für einen Wechsel und zur Wartung erreichbar. Sie können durch diese zentrale Öffnung 9 in ihre zugehörigen Belagschächte eingesetzt und wieder daraus entnommen werden.

In Bezug auf eine Hauptdrehrichtung der Bremsscheibe 2 sind an der Scheibenbremse 10 eine Einlaufseite ES und gegenüberliegend eine Auslaufseite AS festgelegt.

Ein Belaghaltebügel 16 ist über den Bremsbelägen 3, 3' in Querrichtung der Öffnung 9 bzw. in Richtung der Bremsscheibendrehachse 2a zwischen dem Zuspannabschnitt 11 und dem Sattelrücken 12 angeordnet. Der Belaghaltebügel 16 drückt hier mit Abschnitten seiner Unterseite auf Belaghaltefedern 7, 7' der Bremsbeläge 3, 3', wodurch diese in ihren Belagschächten gehalten werden. Die Belaghaltefedern 7 sind jeweils auf den Oberseiten der Belagträgerplatten 4, 4' an Vorsprüngen gehalten.

Eine Bremsung erfolgt mittels der im Zuspannabschnitt 11 des Bremssattels 1 dort in einem Aufnahmeraum angeordneten Zuspanneinrichtung beispielsweise mit einem Bremshebel, der in einem Dom des Bremssattels 1 positioniert ist. Der zugeordnete Bremsbelag 3, als aktionsseitiger oder auch zuspannseitiger Bremsbelag bezeichnet, kontaktiert zunächst bei einer Bremsung die Bremsscheibe 2. Im weiteren Verlauf wird mittels auftretender Reaktionskräfte der Bremssattel 1 entgegengesetzt verschoben, unter Mitnahme des reaktionsseitigen Bremsbelags 3', bis dieser gleichfalls an der Bremsscheibe 2 reibend zur Anlage kommt. Der reaktionsseitige Bremsbelag 3' wird auch rückenseitiger Bremsbelag genannt und im weiteren durch das Bezugszeichen 3' von dem zuspannseitigen Bremsbelag 3 unterschieden.

Nach einem Lösen der Bremse werden die beiden sich gegenüberliegenden Bremsbeläge 3, 3' mittels der Rückstelleinrichtung so weit von der Bremsscheibe 2 gelöst, dass diese gegenüber den Bremsbelägen 3, 3' frei läuft.

In ungünstigen Fällen können die Bremsbeläge 3, 3' auch nach dem Wegnehmen der Bremskraft die Bremsscheibe 2 berühren und dadurch ein Restschleifmoment verursachen.

Um ein Restschleifmoment zu verhindern wird ein Federpaket eingesetzt, das zum Einen eine Anbindung an ein ortsfestes Bauteil (z.B. Bremsträger 6) besitzt und zum Anderen über Federwirkung die Bremsbeläge 3, 3' von der Bremsscheibe 2 wegdrückt.

Ein solches Federpaket ist als eine so genannte Spreizeinrichtung 8 vorgesehen.

Die Spreizeinrichtung 8 greift hier im oberen Bereich der Belagträgerplatten 4, 4' der sich gegenüberliegenden Bremsbeläge 3, 3' gleich wirkend entgegen der Zuspannrichtung an. Auf diese Weise werden die Bremsbeläge 3, 3' in ihren oberen Bereichen mit Rückstellkräften von der Spreizeinrichtung 8 beaufschlagt.

Die Spreizeinrichtung 8 umfasst ein Anbindungselement 18, vier Federarmeinheiten 19, 19' und zwei Verbindungsschnittstellen 20 mit jeweils einem Verbindungselement 21.

Das Anbindungselement 18 ist C-förmig ausgebildet, ortsfest am Bremsträger 6, und zwar an Bremsträgerhörnern 17, befestigt und bildet eine Halterung für die Federarmeinheiten 19, 19'.

Die Federarmeinheiten 19 sind hier als zwei identische Paare von Federarmen 19a, 19'a ausgebildet, welche mit ihren einen Enden zusammen über eine Verbindungsschnittstelle 20 mittels eines Verbindungselementes 21 mit dem Anbindungselement 18 verbunden sind. Die anderen Enden jeweils einer Federarmeinheit 19 stehen als Anbindungsabschnitte 19b, 19'b in Anbindungsschnittstellen A1, A'1, A2, A'2 mit Bremsbelägen 3, 3' in Zusammenwirkung. Hierbei wird durch die beim Zuspannen sich ergebende Vorspannung eine Spreizung der Bremsbeläge 3, 3' nach einem Lösen der Bremse möglich.

Das Anbindungselement 18 und die Federarmeinheiten 19 bestehen hier aus einem Drahtmaterial mit z.B. einem kreisrunden Querschnitt.

Das Anbindungselement 18 umfasst einen hier gerade verlaufenden Zentralabschnitt 18a in einem mittleren Bereich der Öffnung 9, etwa in einer Mittelebene der Bremsscheibe 2. An den Zentralabschnitt 18a schließt sich auf jeder Seite ein nach unten zur Bremsscheibe 2 geneigter Verbindungsabschnitt 18b an. So erstreckt sich das Anbindungselement 18 von der Mitte der Öffnung 9 her beidseitig jeweils bis zu einem Bremsträgerhorn 17 des Belagschachtes des zuspannseitigen Bremsbelags 3.

An jedem Ende der Verbindungsabschnitte 18b ist ein bogenförmiger Verbindungsabschnitt 18c angebracht, der um etwa 90° zu dem jeweiligen Bremsträgerhorn 17 weisend umgebogen ist und jeweils in einen weiteren geraden Verbindungsabschnitt 18d übergeht, der und auf das jeweilige Bremsträgerhorn 17 zuläuft. Diese Verbindungsabschnitte 18d verlaufen dann parallel zueinander und parallel zu der Bremsscheibenachse 2a und sind dann nach unten hin um ca. 90° in jeweils einen Befestigungsabschnitt 18e umgebogen. Jeder Befestigungsabschnitt 18e ist in einer Bohrung 17a eines jeden Bremsträgerhorns 17 befestigt und bildet damit die ortsfeste Halterung des Anbindungselementes 18 mit der Spreizeinrichtung 8 an dem Bremsträger 6.

Dabei bildet das Anbindungselement 18 insofern eine Zentriereinrichtung für den Bremssattel 1, als der Bremsträger 6, an dem das Anbindungselement 18 befestigt ist, ein ortsfestes Teil bildet, dem gegenüber der Bremssattel 1 verschieblich gelagert ist, so dass nach einem Lösen der Bremse und einem Spreizen der Spreizeinrichtung 8, d.h. einem Auseinanderdrücken der Bremsbeläge 3 der Bremssattel 1 in eine zentrierte Stellung geführt wird.

Die beiden Federarme 19a, 19'a eines jeden Paars der Federeinheiten 19, 19' sind spiegelbildlich zu dem Zentralabschnitt 18a des Anbindungselementes 18 ausgebildet, wie in **Figur 2** deutlich zu erkennen ist.

Die Paare der Federarme 19a, 19'a sind sich gegenüberliegend in Querrichtung der Öffnung 9 so angeordnet, dass sie mit inneren Enden, die zur Mitte der Öffnung 9 weisen, an dem Anbindungselement 18 jeweils über eine Verbindungsschnittstelle 20 mittels jeweils eines Verbindungselementes 21 befestigt sind, wobei ihre äußeren freien Enden mit den Belagträgerplatten 4, 4' der Bremsbeläge 3, 3' zusammenwirken. Dabei ist das eine Paar von Federarmen 19a, 19'a rechts von dem Mittelpunkt der Öffnung 9 angeordnet, wobei das andere Paar von Federarmen 19a, 19'a links von dem Mittelpunkt der Öffnung 9 angeordnet ist.

Die Beschreibung einer Federeinheit 19, 19' gilt für die andere Federeinheit 19, 19' in spiegelbildlicher Weise, wie aus den Figuren 1 und 2 deutlich hervorgeht.

Jeder Federarm 19a, 19'a weist einen geraden Körper mit einem inneren und einem äußeren Ende auf. Die inneren Enden sind nahe beieinander und weisen zur Mitte der Öffnung 9, wobei die äußeren Enden weit voneinander entfernt sind und jeweils über einem Endbereich einer Belagträgerplatte 4, 4' angeordnet sind.

Die inneren Enden beider Federarme 19a, 19'a sind jeweils mit einem geraden Verbindungsabschnitt 19c, 19'c versehen. Die Verbindungsabschnitte 19c, 19'c verlaufen parallel zueinander und parallel zu einer Mittenebene der Bremsscheibe 2, wobei sie über einen oberen Verbindungsbogen 19d verbunden sind.

In dieser Ausführung sind die beiden Federarme 19a, 19'a einstückig mit dem Verbindungsbogen 19d ausgebildet, z.B. als Drahtbiegeteil. Es ist aber auch möglich, dass die Federarme 19a, 19'a einzeln gefertigt sind und dann über ein Zusatzteil, welches den Verbindungsbogen 19d bildet, nachträglich verbunden werden, z.B. durch Schweißen. Dabei kann es auch möglich sein, dass hierbei die Verbindungsabschnitte 19c, 19'c und der Verbindungsboden 19d das Zusatzteil bilden.

Das äußere freie Ende eines jeden Federarms 19a, 19'a weist einen nach unten weisenden Anbindungsabschnitt 19b, 19'b zur jeweiligen Zusammenwirkung mit der Belagträgerplatte 4, 4' in einer jeweiligen Anbindungsschnittstelle A1, A'1, A2, A'2 auf.

In dem in Figur 1 gezeigten Ausführungsbeispiel sind die Anbindungsabschnitte 19b, 19'b nach unten umgebogen und geradlinig ausgeführt. Dabei sind sie in Aufnahmeöffnungen 4c, 4'c in Oberseiten 4d, 4'd in Eckbereichen der jeweiligen Belagrückenplatte 4, 4' der Bremsbeläge 3, 3' formschlüssig aufgenommen. Die Aufnahmeöffnungen 4c, 4'c kommunizieren mit der Form der Anbindungsabschnitte 19b, 19'b und sind hier als Bohrungen ausgeführt. Die Wände bzw. die Wand einer jeweiligen Aufnahmeöffnung 4c, 4'c bildet eine Anlagefläche für den jeweiligen Anbindungsabschnitt 19b, 19'b. Die Aufnahmeöffnungen 4c, 4'c können beispielsweise als Sacklöcher oder/und als Durchgangslöcher ausgebildet sein. Die Aufnahmeöffnungen 4c, 4'c können unterschiedliche Querschnitte aufweisen, so z.B. rund, kreisrund, oval, eckig, wobei die Querschnitte der in ihnen aufgenommenen Anbindungsabschnitte 19b, 19'b der Federarme 19a, 19'a mit dem jeweiligen Querschnitt der Aufnahmeöffnungen 4c, 4'c kommunizieren. Es ist aber auch möglich, dass runde Anbindungsabschnitte 19b, 19'b in eckige oder ovale Aufnahmeöffnungen 4c, 4'c eingesetzt werden können.

Wenn die Aufnahmeöffnungen 4c, 4'c als Sacklöcher ausgebildet sind, können die Enden der Anbindungsabschnitte 19b, 19'b auf dem jeweiligen Boden eines Sacklochs, welcher eine Auflagefläche bilden kann, aufliegen.

Die inneren Enden der Verbindungsabschnitte 19c, 19'c und der sie verbindende Verbindungsbogen 19d sind mit einem jeweiligen Verbindungselement 21 verbunden. Die Verbindungselemente 21 bilden jeweils eine Verbindungsschnittstelle 20 zwischen den jeweiligen Federeinheiten 19, 19' und dem ortsfesten Anbindungselement 18. Dies ist in **Figur 3** vergrößert gezeigt.

Das Verbindungselement 21 umfasst einen längsverlaufenden Basisabschnitt 21a, zwei sich gegenüberliegende Flügelabschnitte 21b, 21'b und zwei sich gegenüberliegende Paare von Hülsenabschnitten 21c, 21'c; 21d, 21'd.

Im eingebauten Zustand der Spreizeinrichtung 8 wie in Figur 1 gezeigt verläuft der Basisabschnitt 21a in Längsrichtung der Öffnung 9. An einem äußeren Ende des Basisabschnitts 21a, das von der Mitte der Öffnung 9 weg weist, sind die Flügelabschnitte 21b, 21'b angebracht. Jeder Flügelabschnitt 21b, 21'b bildet auf jeder Längsseite des Basisabschnitts 21a eine rechtwinklig zur Längsrichtung des Basisabschnitts 21a von diesem hervorstehende Lasche.

An dem anderen, dem inneren Ende des Basisabschnitts 21a sind beidseitig die Hülsenabschnitte 21c, 21'c; 21d, 21'd angeformt, welche sich nach oben erstrecken und um den Zentralabschnitt 18a des Anbindungselementes 18 herum gebogen sind.

Der Basisabschnitt 21a ist der runden Außenform des Zentralabschnitts 18a des Anbindungselementes 18 angepasst, wobei der Zentralabschnitt 18a im eingebauten Zustand auf dem Basisabschnitt 21a in dessen Längsrichtung verlaufend angeordnet ist. Dabei liegt der Zentralabschnitt 18a zwischen den Flügelabschnitten 21b, 21'b auf einem Auflageabschnitt 21f des Basisabschnitts 21a und innerhalb der Hülsenabschnitte 21c, 21'c; 21d, 21'd auf dem Basisabschnitt 21a auf.

Die zugehörigen Federeinheit 19, 19' ist mit dem Verbindungselement 21 derart verbunden, dass die beiden Verbindungsabschnitte 21c, 21'c parallel zu dem Basisabschnitt 21a des Verbindungselementes 21 unter jeweils einem Flügelabschnitt 21b, 21'b verlaufen, wobei die inneren Enden der beiden Verbindungsabschnitte 19c, 19'c jeweils in einem 90°-Bogen nach oben gebogen sind und dann in den Verbindungsbogen 19d übergehen. Der Verbindungsbogen 19d verläuft dabei zwischen den Hülsenabschnitten 21c, 21'c; 21d, 21'd und ist innerhalb von axialen Zwischenräumen 21e, 21'e angeordnet. Auf diese Weise ist das Verbindungselement 21 mit der Federeinheit 19, 19' verbunden, wobei gleichzeitig eine Verbindung mit dem Zentralabschnitt 18a des Anbindungselementes 18 gebildet ist, welches sich einerseits parallel zu den Verbindungsabschnitten 19c, 19'c der Federeinheit 19, 19' auf dem Basisabschnitt 21a und andererseits weiter durch die Hülsenabschnitte 21c, 21'c; 21d, 21'd und unterhalb des Verbindungsbogens 19d der Federeinheit 19, 19' hindurch erstreckt.

Auf diese Weise ist in jeder Verbindungsschnittstelle 20 eine Federeinheit 19, 19' mit den jeweiligen beiden Federarmen 19a, 19'a auf dem Zentralabschnitt 18a des Anbindungselementes 18 nicht nur axial verschiebbar in Längsrichtung des Zentralabschnitt 18a des Anbindungselementes 18 sondern auch drehbar gelagert.

Mit anderen Worten, die Federeinheiten 19, 19' können sich unabhängig voneinander in axialer Richtung der Längsachse des Zentralabschnitts 18a des Anbindungsabschnitts 18 bewegen und sich gleichzeitig unabhängig voneinander um die Längsachse des Zentralabschnitts 18a verdrehen. Damit wird die Spreizeinrichtung besonders flexibel und anpassungsfähig. Für eine einfachere Montierbarkeit ist jedoch ebenfalls eine Fixierung der Drehbarkeit vorstellbar.

Durch den zunehmenden Verschleiß des Reibmaterials, d.h. der Reibbeläge 5, 5' der Bremsbeläge 3, 3' wie auch der Bremsscheibe 2, muss die Anbindung der Federarme 19a, 19'a einen Freiheitsgrad aufweisen. Dieser Freiheitsgrad dient dazu ein mehrachsiges Verspannen/ Verkippen des Systems zu verhindern. Hierzu ist die Anbindung der Federelemente in Form der Federarme 19a, 19'a mittels der Verbindungsschnittstellen 20 an dem ortsfesten Anbindungselement 18 verschiebbar ausgeführt. Die Kompensation des Reibmaterialverschleißes kann somit durch ein axiales Gleiten der Federarmanbindung in den Verbindungsschnittstellen 20 zum ortsfesten Anbindungselement 18 erfolgen.

Der Zusammenbau der kompletten Spreizeinrichtung 8 (Zentriereinheit) wird dabei so ausgelegt, dass an den Verbindungsschnittstellen 20 zwischen federnden Federeinheiten 19, 19 und Anbindungselement 8 (ortsfestes Bauteil) ein bestimmtes Spiel vorgesehen ist. Durch dieses Spiel verschieben sich beim fortschreitenden Zuspannen der Federeinheiten 19, 19' die Verbindungsschnittstellen 20 in Richtung Mitte der Öffnung 9 der Scheibenbremse 10 (zum Belaghaltebügel 16 hin).

Die Anbindung der Federeinheiten 19, 19' wird über das jeweilige Verbindungselement 21 ausgeführt. Das Verbindungselement 21 kann beispielhaft ein verpresstes Blechelement sein. Es kann jedoch in seiner Ausführung variieren. Ein Verschieben in axialer Richtung des Drahtbügels ist möglich.

Die während der Fahrt eines Fahrzeugs, welches die Scheibenbremse 10 aufweist, auftretenden Vibrationen erleichtern ein Verschieben der Verbindungsschnittstellen 20, so dass auch bei Verschmutzung von einer korrekten Funktionsweise ausgegangen werden kann.

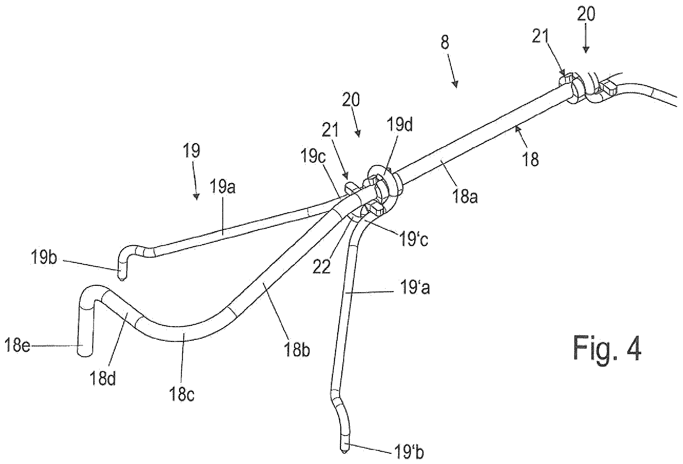

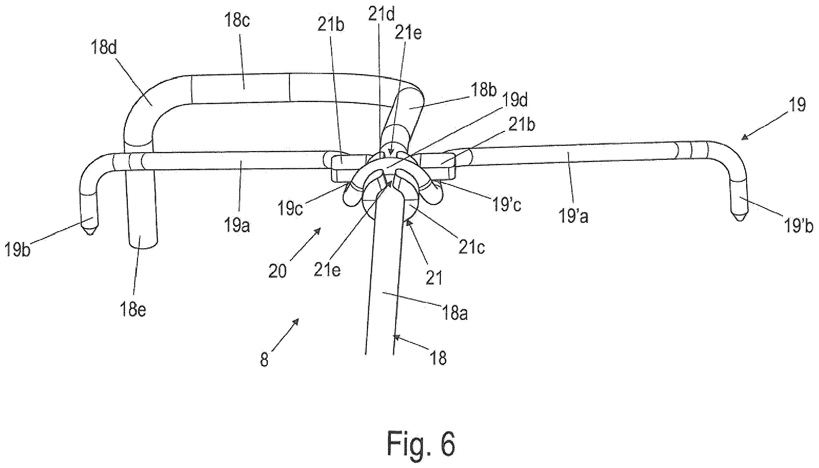

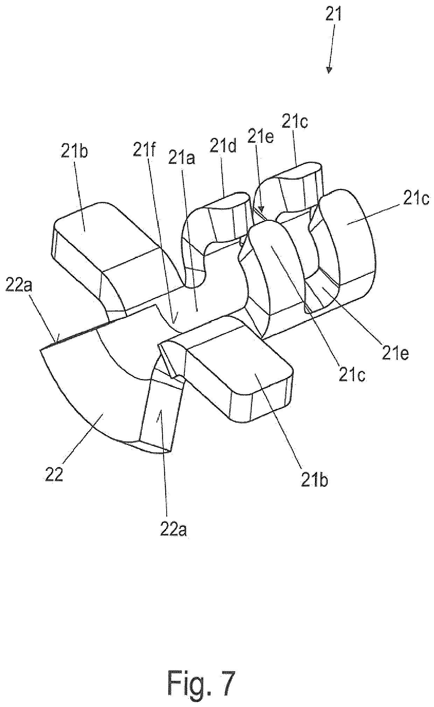

In den **Figuren 4 - 6** sind weitere schematische Perspektivdarstellungen der Spreizeinrichtung 8 nach Figur 1 mit einer ersten Variante der Verbindungsschnittstelle 20 gezeigt. **Figur 7** stellt eine vergrößerte schematische Perspektivansicht der Variante der Verbindungsschnittstelle 20 der Spreizeinrichtung 8 nach Figuren 4-6 dar.

Die erste Variante der Verbindungsschnittstelle 20 besteht darin, dass an dem äußeren Ende des Verbindungselementes 21 ein nach unten umgebogener Distanzabschnitt 22 angebracht ist. An Seitenabschnitten 22a des Distanzabschnitts 22 liegen die Verbindungsabschnitte 19c, 19'c der Federeinheiten 19, 19' an.

In **Figur 7** ist das zugehörige Verbindungselement 21 gezeigt.

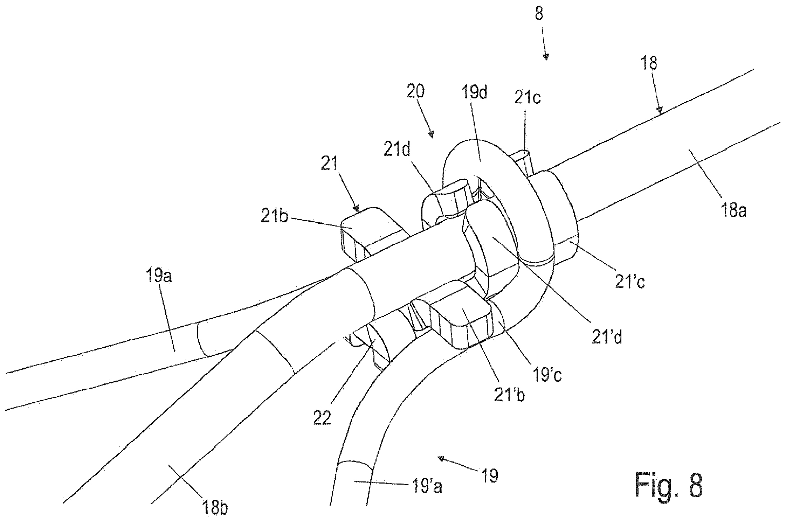

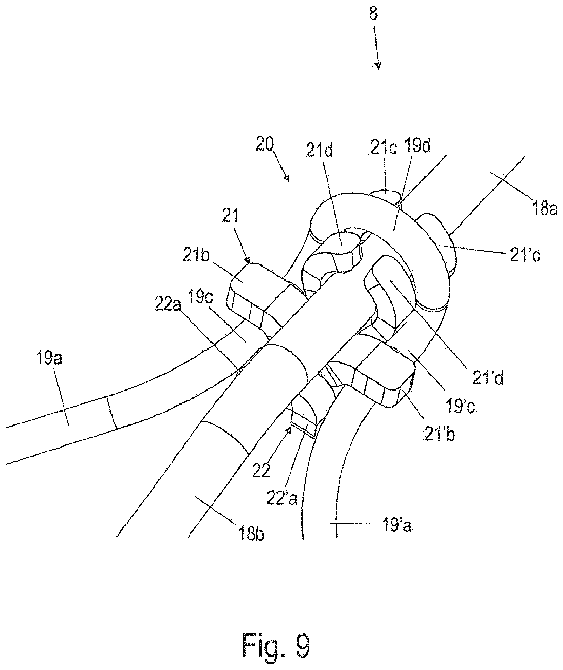

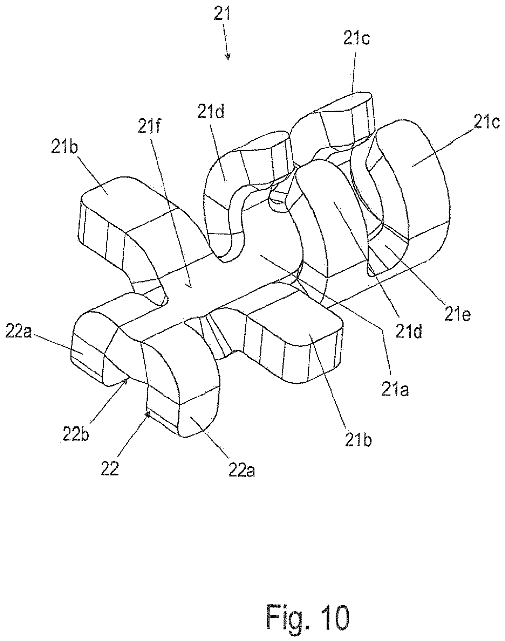

**Figuren 8 - 9** stellen vergrößerte schematische perspektivische Teildarstellungen der Spreizeinrichtung 8 nach Figur 1 mit einer zweiten Variante der Verbindungsschnittstelle 20 mit einem leicht veränderten Verbindungselement 21 dar. Hierbei ist der Distanzabschnitt 22 mit einer zentralen Ausnehmung 22a versehen, wie in **Figur 10** in einer vergrößerten schematischen Perspektivansicht der zweiten Variante der Verbindungsschnittstelle 20 der Spreizeinrichtung 21 nach Figuren 8-9 deutlich zu erkennen ist.

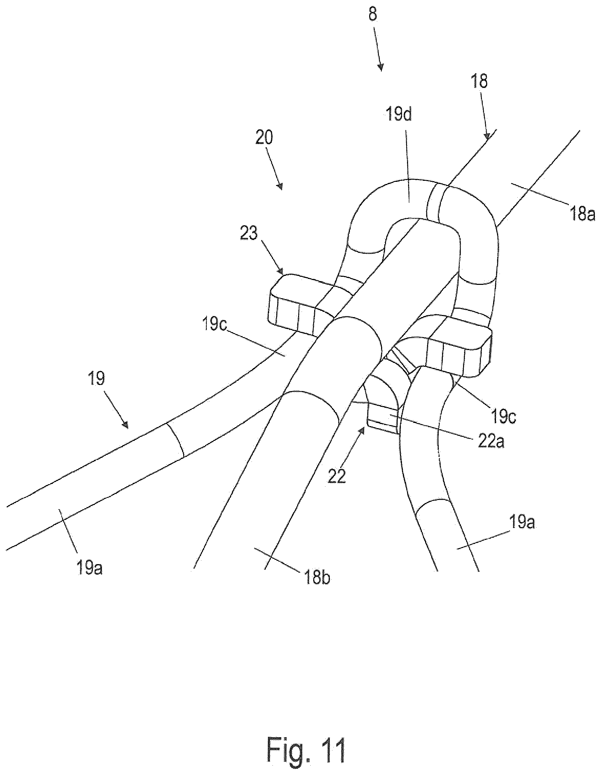

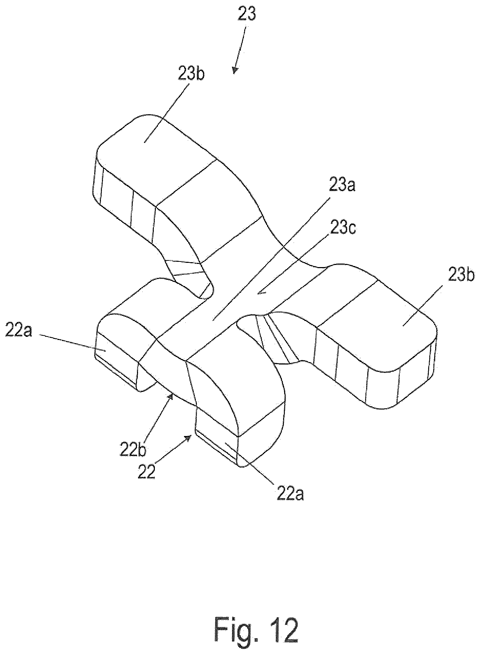

**Figur 11** zeigt eine vergrößerte schematische perspektivische Teildarstellung der Spreizeinrichtung nach Figur 1 mit einer dritten Variante der Verbindungsschnittstelle 20. Das zugehörige, hier in seiner Gestalt reduzierte, Verbindungselement 23 zeigt **Figur 12** in einer vergrößerten schematischen Perspektivansicht der dritten Variante der Verbindungsschnittstelle 20 der Spreizeinrichtung 8 nach Figur 11.

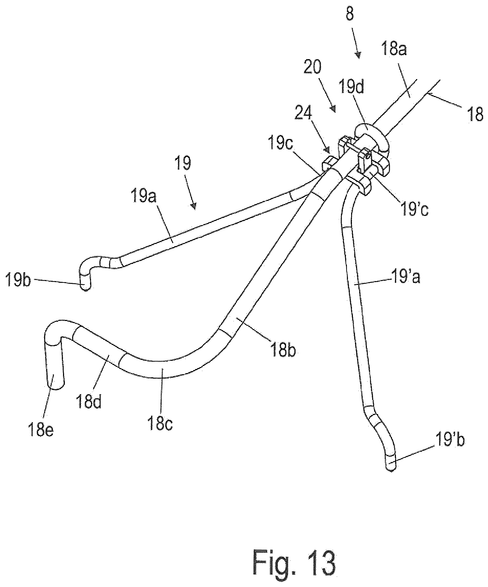

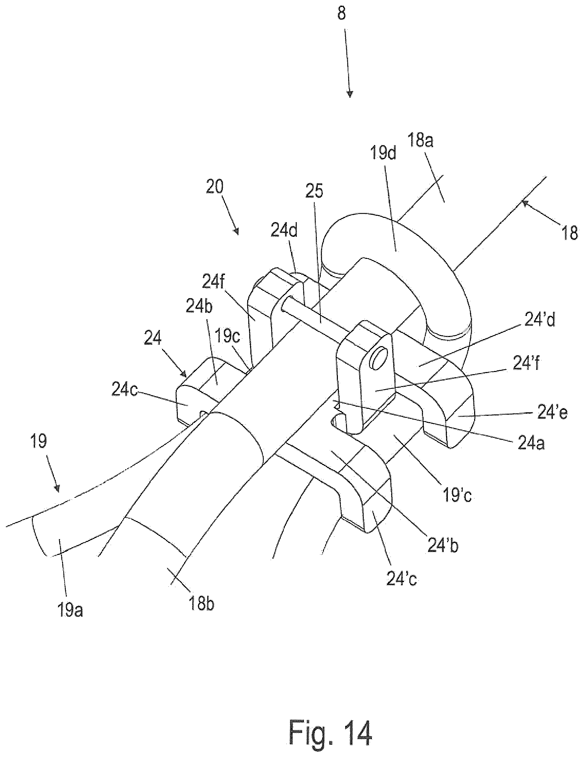

In den **Figuren 13** **und** **14** sind vergrößerte schematische perspektivische Teildarstellungen der Spreizeinrichtung 8 nach Figur 1 mit einer vierten Variante der Verbindungsschnittstelle 20 mit einem Verbindungselement 24 dargestellt. Hierbei sind vier Flügelabschnitte 24b, 24'b; 24d, 24'd vorgesehen, wobei ein Führungsabschnitt als Gabelführung 24f, 24'f mit einem Stift 25 zur Sicherung vorgesehen ist.

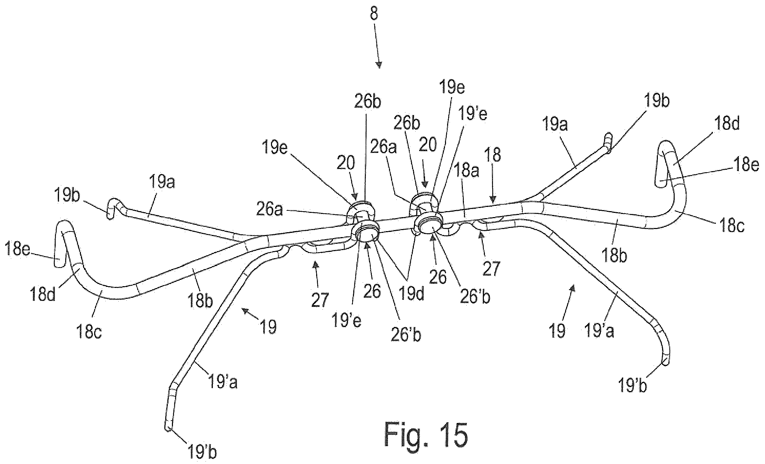

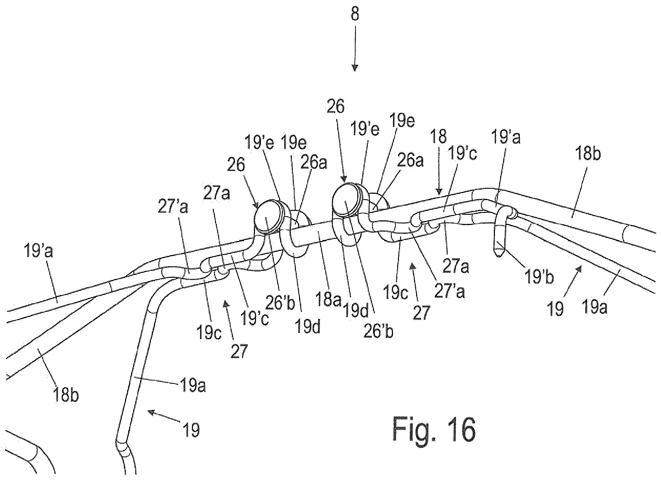

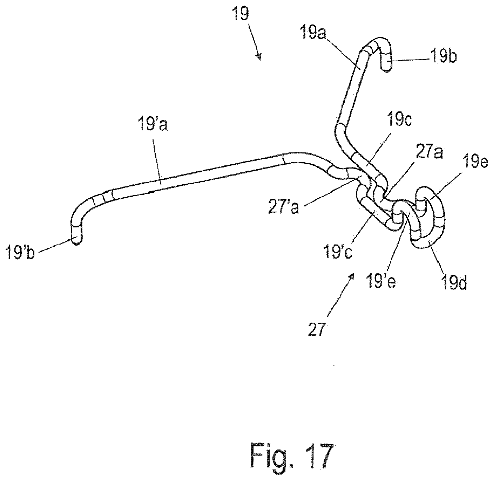

**Figuren 15-16** zeigen vergrößerte schematische Perspektivansichten einer ersten Variante der Spreizeinrichtung 8 nach Figur 1 mit einer fünften Variante der Verbindungsschnittstelle 8. In **Figur 17** ist eine vergrößerte schematische Perspektivansicht einer Federarmeinheit 19 der ersten Variante der Spreizeinrichtung 8 nach Figuren 15-16 gezeigt.

In dieser Variante sind Führungselemente 26 mit Stiften 26a in Bogenabschnitten 19e, 19'e der Federeinheiten aufgenommen. Dabei sind die Verbindungsabschnitte 19c, 19'c jeweils als Tragabschnitte 27 mit Bogenabschnitten 27a, 27'a in einer horizontalen Ebene versehen. Der Zentralabschnitt 18a des Anbindungselementes 18 ist hier auf den Tragabschnitten 27 angeordnet und wird durch die Stifte 26a, der Führungselemente 26 auf den Tragabschnitten 27 gehalten.

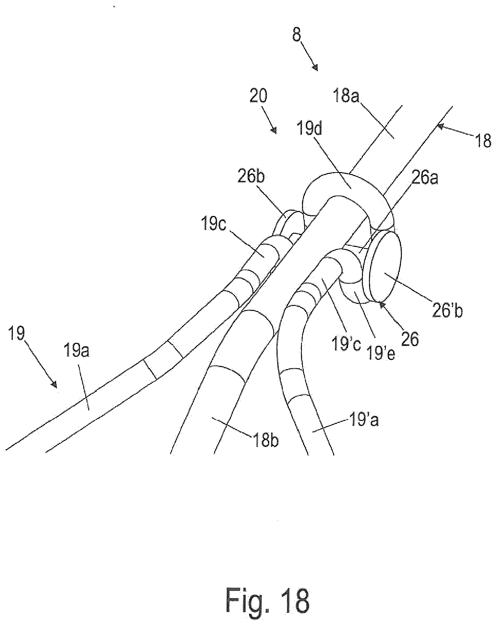

In **Figur 18** ist eine vergrößerte schematische Teilperspektivansicht einer zweiten Variante der Spreizeinrichtung 8 nach Figur 1 mit einer sechsten Variante der Verbindungsschnittstelle 20 mit einem Verbindungselement 26 gezeigt. Das Verbindungselement 26 ist ähnlich wie dasjenige der fünften Variante aufgebaut, jedoch im Unterschied dazu unterhalb des Zentralabschnitts 18a des Anbindungselementes 18 angeordnet. Der Zentralabschnitt 18a verläuft dabei auf dem Stift 26a des Führungselementes 26 und erstreckt sich durch den Verbindungsbogen 19d der Federeinheit 19, 19'.

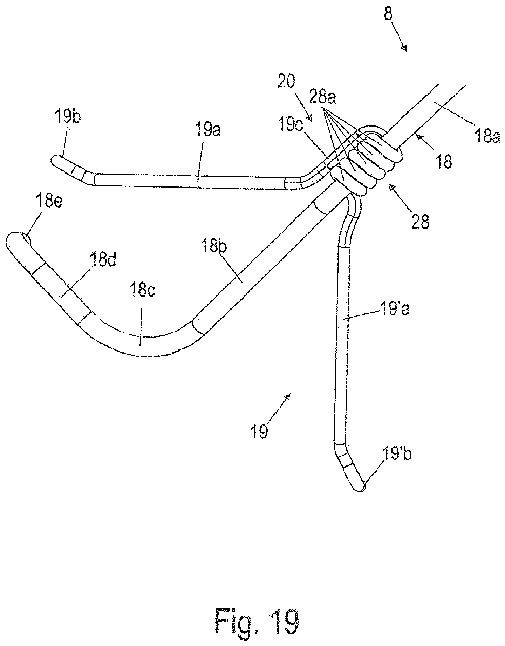

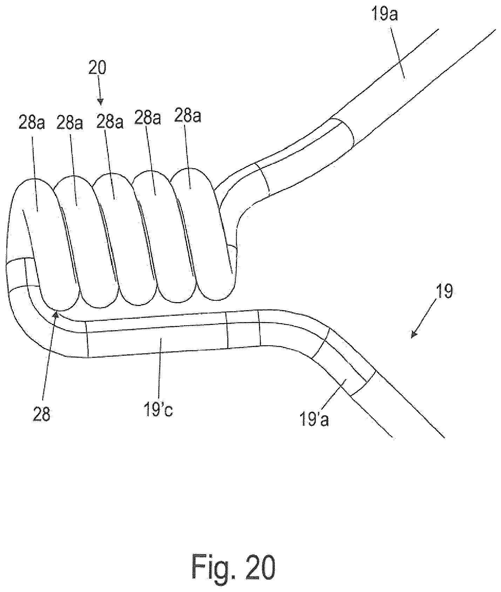

**Figur 19** zeigt eine vergrößerte schematische Teilperspektivansicht einer dritten Variante der Spreizeinrichtung 8 nach Figur 1 mit einer siebten Variante der Verbindungsschnittstelle 20. **Figur 20** zeigt eine vergrößerte Perspektivansicht der siebten Variante der Verbindungsschnittstelle 20 der dritten Variante der Spreizeinrichtung nach Figur 19. Hierbei wird ein Verbindungselement 28 als ein Führungsabschnitt durch Windungen 28a der Verbindungsabschnitte 19c, 19'c um den Zentralabschnitt 18a des Anbindungselementes 18 gebildet. Das Verbindungselement 28 ist hier in einer Art Wicklung ausgebildet.

Auf diese Weise sind in dieser siebten Variante die Federarme 19a, 19'a zusammen mit dem Verbindungselement 28 einstückig ausgebildet. Mit anderen Worten, das Verbindungselement 28 der Verbindungsschnittstelle 20 ist einstückig mit den Federarmen 19a, 19'a gebildet. Auch hier ist es denkbar, dass die Federarme 19a, 19'a separat hergestellt werden, wobei das Verbindungselement 28 als Zusatzteil nachträglich mit den Federarmen 19a, 19'a verbunden wird, z.B. durch Schweißen.

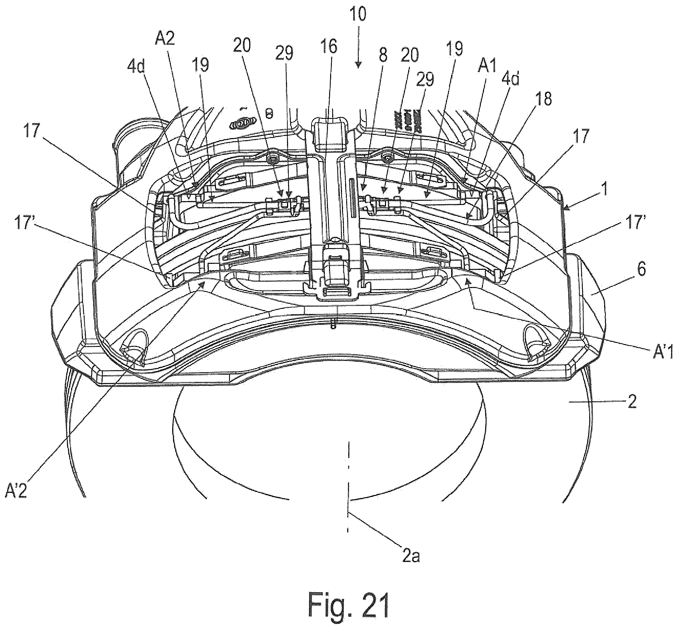

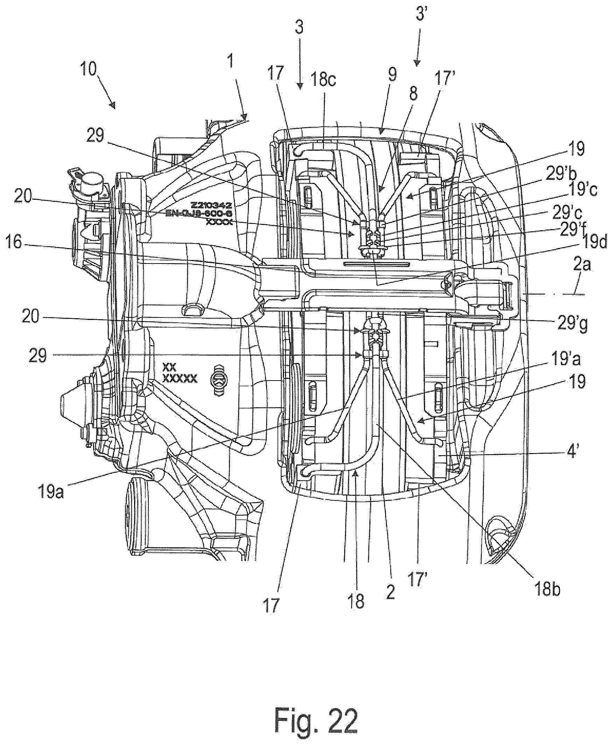

In den **Figuren 21-22** sind Teilausschnitte der erfindungsgemäßen Scheibenbremse 10 mit der erfindungsgemäßen Spreizeinrichtung 8 nach Figur 1 mit einer achten Variante der Verbindungsschnittstelle 20 dargestellt.

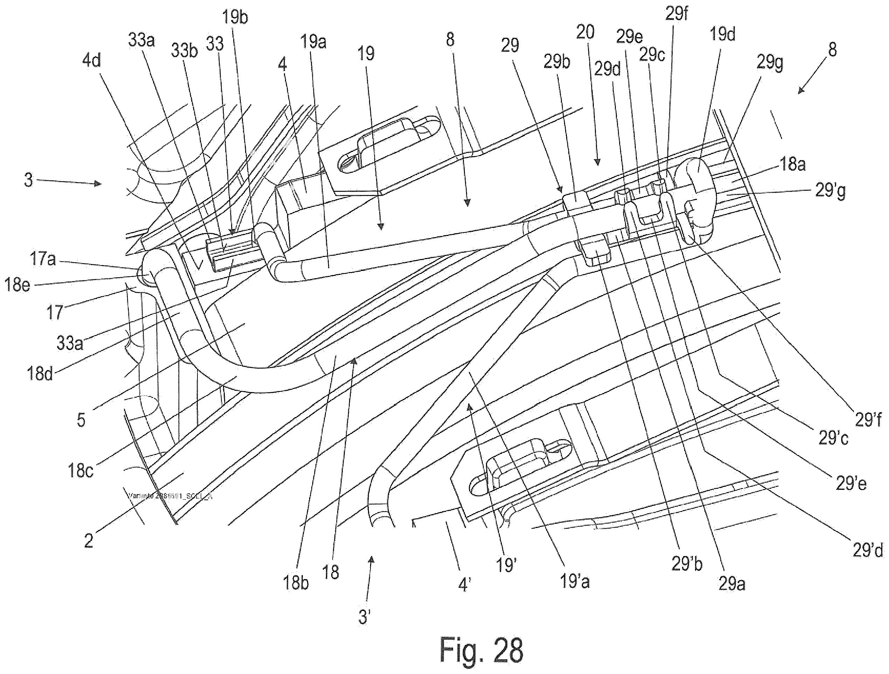

Die Verbindungsschnittstellen 20 weisen hier zwei Verbindungselemente 29 auf, welche durch einen gemeinsamen Basisabschnitt 29a verbunden sind. Das Verbindungselement 29 ist am besten in **Figur 28** gezeigt und weist bereits oben beschriebenen Flügelabschnitte 29b, 29'b und Hülsenabschnitte 29c, 29'c; 29d, 29'd mit Zwischenräumen 29e, 29'e auf. Zusätzlich sind noch weitere Flügelabschnitte 29f, 29'f zwischen den Hülsenabschnitten 29c, 29'c; 29d, 29'd und einem Verbindungsbereich des Basisabschnitts 29a an dem Basisabschnitt29a angebracht. Der Verbindungsbogen ist im Gegensatz zu der Verbindungsschnittstelle 20 nach Figur 1 nicht in den Hülsenabschnitten 29c, 29'c; 29d, 29'd angeordnet, sondern, sondern über den Enden von Führungsabschnitten 29g, 29'g. Der Verbindungsbereich des Basisabschnitts 29a ist mit den längsverlaufenden nach oben umgebogenen Führungsabschnitten 29g, 29'g versehen. Der Zentralabschnitt 18a des Anbindungselementes 18 liegt auf dem Verbindungsbereich des Basisabschnitts 29a zwischen den beiden Seitenabschnitten 29g, 29'g.

Die Anbindungsschnittstellen A1, A'1, A2, A'2 sind wie in dem Ausführungsbeispiel nach Figur 1 mit Aufnahmeöffnungen 4c, 4'c ausgeführt, die aber im Gegensatz dazu weiter zur Mitte auf der Oberseite 4d, 4'd der jeweiligen Belagrückenplatte 4, 4' versetzt sind.

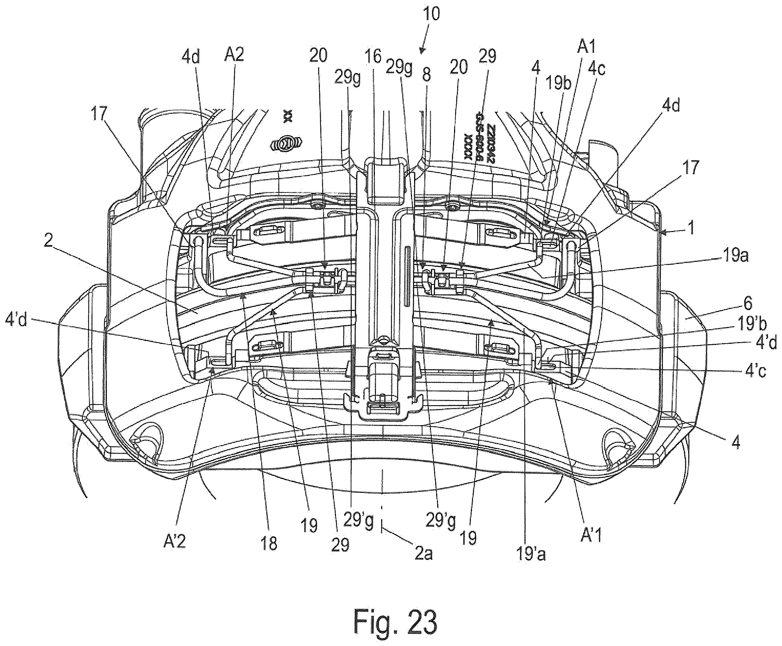

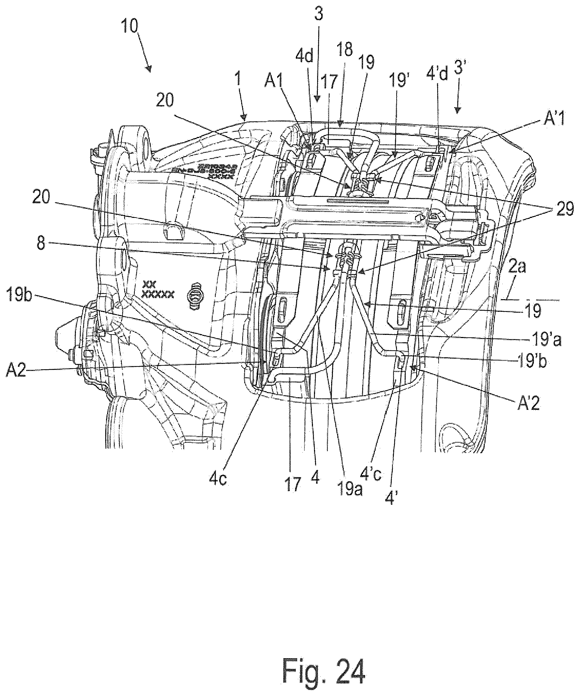

**Figuren 23-24** zeigen die erfindungsgemäße Scheibenbremse 10 nach Figuren 21-22 mit einer ersten Variante von Anbindungsschnittstellen A1, A'1, A2, A'2. Hierbei sind die Aufnahmeöffnungen 4c, 4'c als gefräste oder gegossene Langlöcher ausgebildet. Diese Langlöcher können als Sacklöcher oder/und als Durchgangslöcher ausgebildet sein.

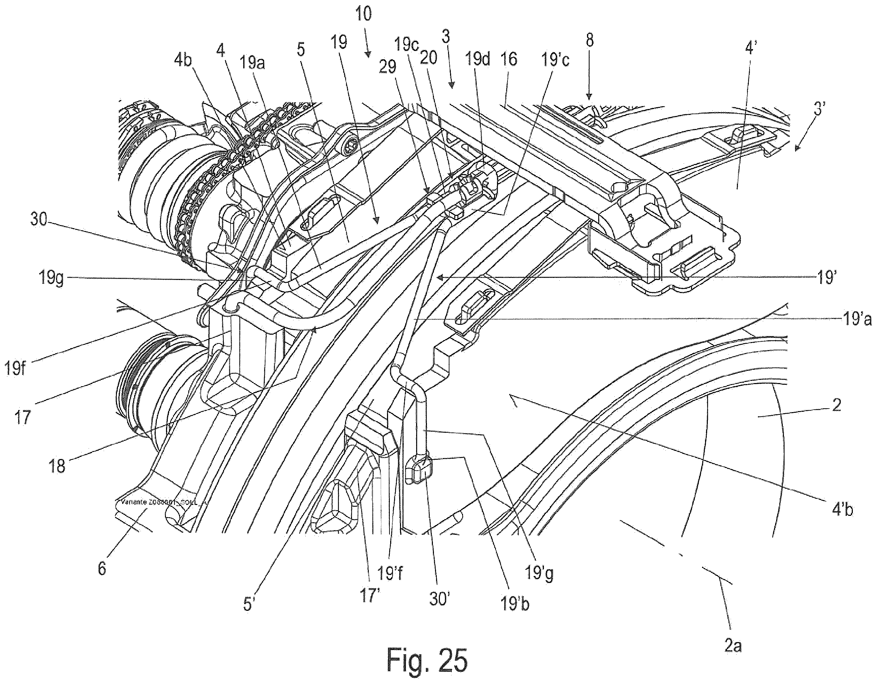

**Figur 25** stellt die erfindungsgemäße Scheibenbremse 10 nach Figuren 21-22 mit einer zweiten Variante von Anbindungsschnittstellen A1, A'1, A2, A'2 dar, wobei die Anbindungsabschnitte 19b, 19'b der Federarme 19a, 19'a an als Verlängerungen ausgeführten Verbindungsabschnitten 19g, 19'g angebracht sind und in Bohrungen, die zum Beispiel in einem Anguss 30, 30' in der Mitte des Reibradius' auf den Druckseiten 4b, 4'b der Belagrückenplatten 4, 4' eingebracht sind; Damit wird dem Verkippen der Bremsbeläge 3, 3' entgegengewirkt.

Die Verbindungsabschnitte 19g, 19'g sind wiederum mit ihren oberen Enden über jeweils einen weiteren Verbindungsabschnitt 19f, 19'f mit dem zugehörigen Federarm 19a, 19'a verbunden. Dabei verlaufen die Verbindungsabschnitte 19g, 19'g parallel zu der jeweiligen Druckseite 4b, 4'b der Belagträgerplatte 4, 4', wobei die Verbindungsabschnitte 19f, 19'f in etwa rechtwinklig an den oberen Enden der Verbindungsabschnitte 19g, 19'g angebracht sind und parallel zu der Bremsscheibendrehachse 2a über einen Abschnitt der Oberseite 4d, 4'd der jeweiligen Belagträgerplatte 4, 4' verlaufen und auf diesem Abschnitt der Oberseite 4d, 4'd aufliegen können.

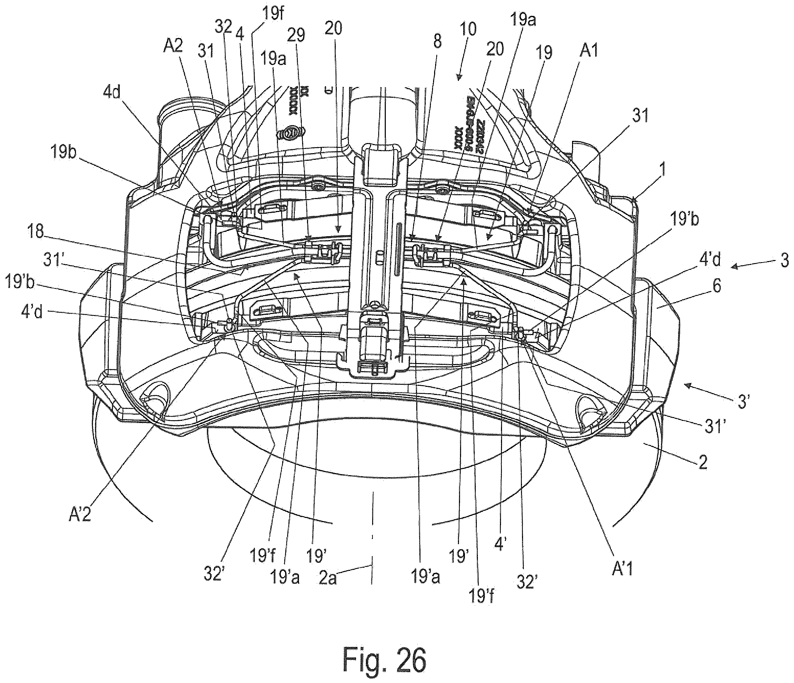

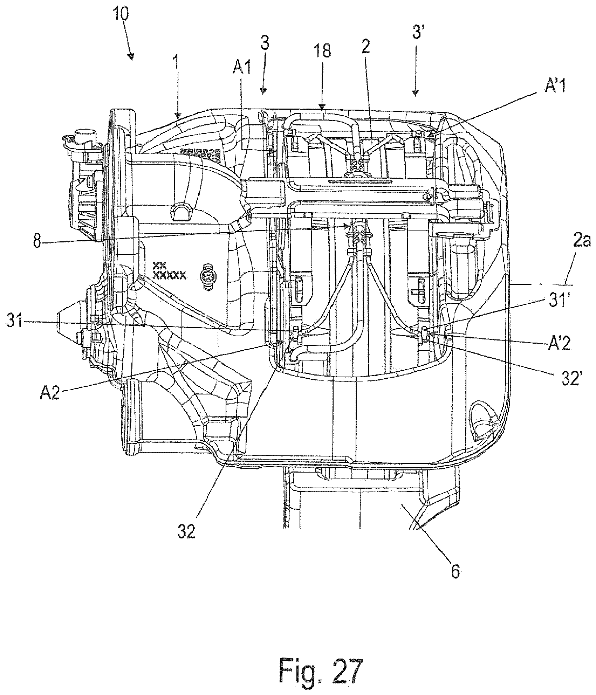

In den **Figuren 26-27** ist die erfindungsgemäße Scheibenbremse 10 nach Figuren 21-22 mit einer dritten Variante von Anbindungsschnittstellen A1, A'1, A2, A'2 gezeigt. Die Federarme 19a, 19'a liegen mit ihren Anbindungsabschnitten 19b, 19'b an einem Zylinderstift 31 in der Belagrückenplatte 4, 4' seitlich an. Die Zylinderstifte 31 werden in Passbohrungen eingesetzt und verfügen gegebenenfalls über einen Absatz 32. Der Absatz 32 dient dazu, eine Relativbewegung zwischen Edelstahl der Anbindungsabschnitte 19b, 19'b und Gussmaterial der Belagrückenplatte 4, 4' zu verhindern.

**Figur 28** zeigt die erfindungsgemäße Scheibenbremse 10 nach Figuren 21-22 mit einer dritten Variante von Anbindungsschnittstellen A1, A'1, A2, A'2. In dieser dritten Variante umfassen die Anbindungsschnittstellen A1, A'1, A2, A'2 jeweils ein Führungselement 33 mit Führungsabschnitten 33a. Die Führungsabschnitte 33a verlaufen in Längsrichtung der Belagrückenplatte 4, 4' parallel zueinander und legen zwischen sich eine Führungsaufnahme 33b fest. Die Anbindungsabschnitte 19b, 19'b der Federarme 19a, 19'a stehen in Eingriff mit der jeweiligen Führungsaufnahme 33b. Das Führungselement 33 ist in die Belagrückenplatte 4, 4' beispielsweise eingepresst, kann zum Beispiel aus Edelstahl gefertigt werden und verhindert eine Relativbewegung zwischen hartem Federmaterial der Anbindungsabschnitte 19b, 19'b und weichem Gussmaterial der Belagrückenplatte 4, 4'.

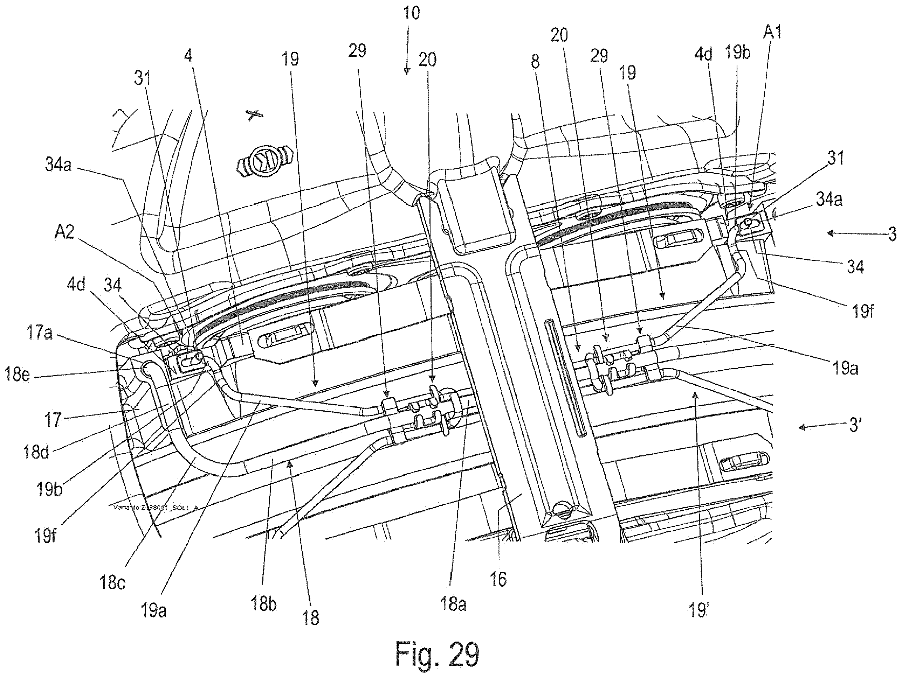

**Figur 29** stellt die erfindungsgemäße Scheibenbremse 10 nach Figuren 21-22 mit einer vierten Variante von Anbindungsschnittstellen dar.

Die Anbindungsabschnitte 19b, 19'b der Federarme 19a, 19'a werden am Ende zu flachen Endabschnitten 34 platt gedrückt, damit anschließend ein Langloch 34a ausgestanzt werden kann. Dieses Langloch 34 kann zum Beispiel über einen Zylinderstift 31 platziert werden.

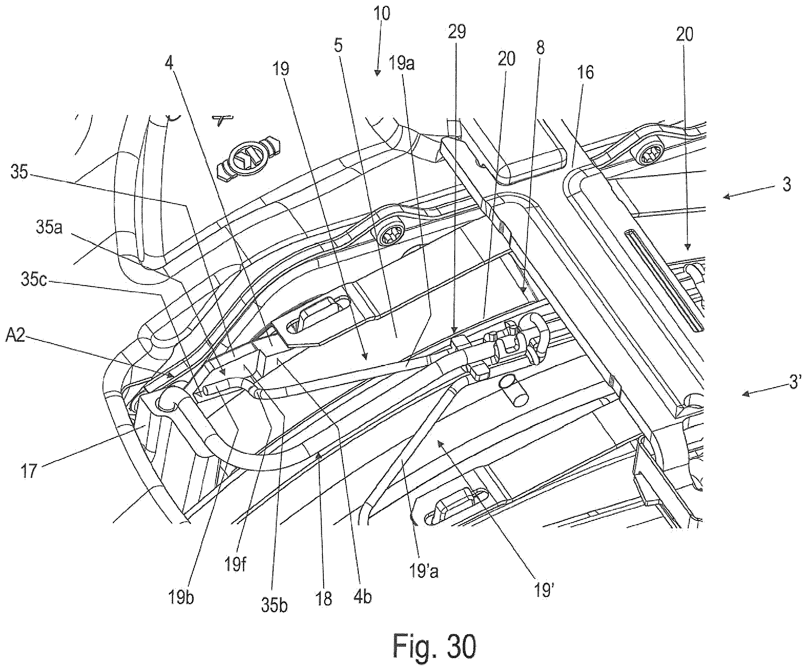

In **Figur 30** ist die erfindungsgemäße Scheibenbremse 10 nach Figuren 21-22 mit einer fünften Variante von Anbindungsschnittstellen A1, A'1, A2, A'2 gezeigt. Die Anbindungsabschnitte 19b, 19'b der Federarme 19a, 19'a werden an einem Eckabschnitt 35 der Belagrückenplatte 4, 4' an einem gefrästem Absatz 35a geführt. Der Absatz 35a weist eine Druckfläche 35b und eine Auflagefläche 35c auf. Die Druckfläche 35b ist hier parallel zu der Belagseite 4b, 4'b der Belagrückenplatte 4, 4'. Die Anbindungsabschnitte 19b, 19'b stehen mit der Druckfläche 35b und der Auflagefläche 35c in Kontakt.

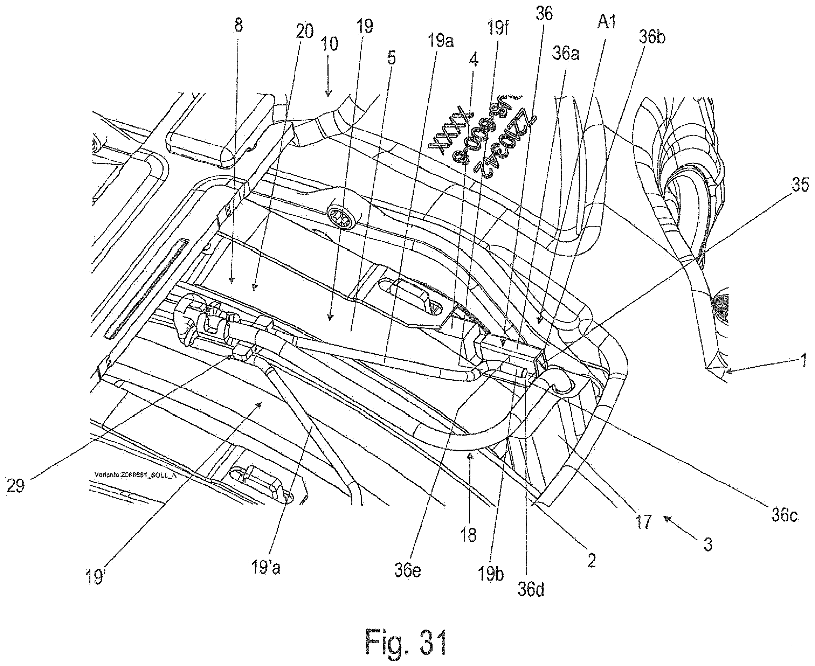

In Figur 31 ist die erfindungsgemäße Scheibenbremse 10 nach Figuren 21-22 mit einer sechsten Variante von Anbindungsschnittstellen A1, A'1, A2, A'2 dargestellt.

Über den gefrästen Absatz 35 in der Belagrückenplatte 4, 4' wird ein Führungselement aus zum Beispiel Edelstahl gestülpt und ggf. verschweißt oder verklebt. Die Anbindungsabschnitte 19b, 19'b der Federarme 19a, 19'a können über dieses zusätzliche Bauteil geführt werden.

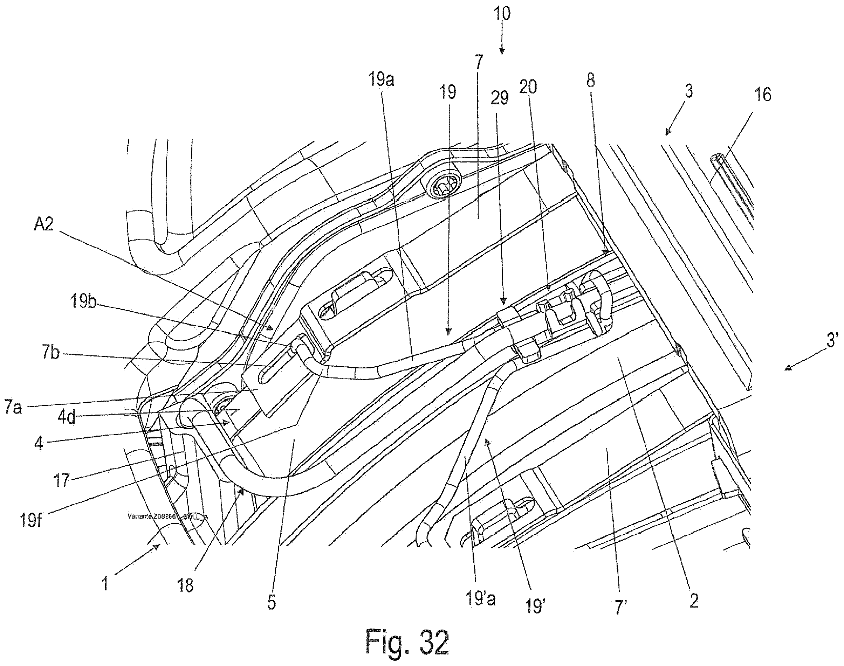

**Figur 32** zeigt die erfindungsgemäße Scheibenbremse 10 nach Figuren 21-22 mit einer siebten Variante von Anbindungsschnittstellen A1, A'1, A2, A'2. In dieser Variante stehen die Anbindungsabschnitte 19b, 19'b der Federarme 19a, 19'a mit jeweils einem Federende 7a, 7'a der Belaghaltefedern 7, 7' in Langlöchern 7b in Eingriff.

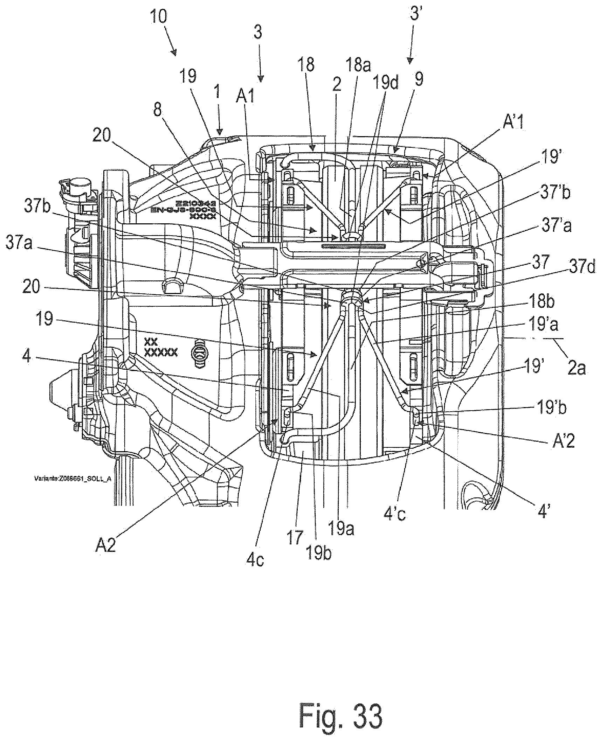

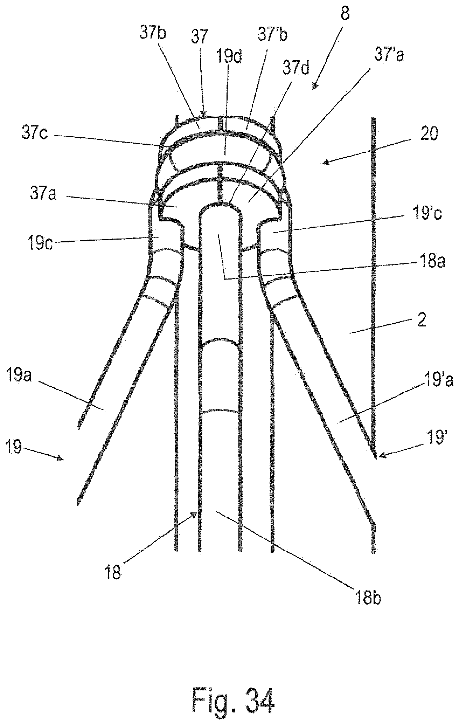

**Figur 33** stellt die erfindungsgemäße Scheibenbremse 10 nach Figur 23 mit einer neunten Variante der Verbindungsschnittstelle 20 mit einem Verbindungselement 37 dar. **Figur 34** zeigt eine vergrößerte schematische Perspektivdarstellung der neunten Variante der Verbindungsschnittstelle 20 mit dem Verbindungselement 37 nach Figur 33.

Das Verbindungselement 37 weist in der neunten Variante Hülsenabschnitte 37a, 37'a; 37b, 37'b mit einem Zwischenraum 37c und einer Durchführungsöffnung 37d auf. Die Enden der Verbindungsabschnitte 19c, 19'c der Federeinheit 19, 19' und ihr Verbindungsbogen 19d wird mit den Hülsenabschnitten 37a, 37'a; 37b, 37'b auf beiden Seiten verpresst. Der Zentralabschnitt 18a des Anbindungselementes 18 erstreckt sich durch die Durchführungsöffnung 37d der Hülsenabschnitte 37a, 37'a; 37b, 37'b.

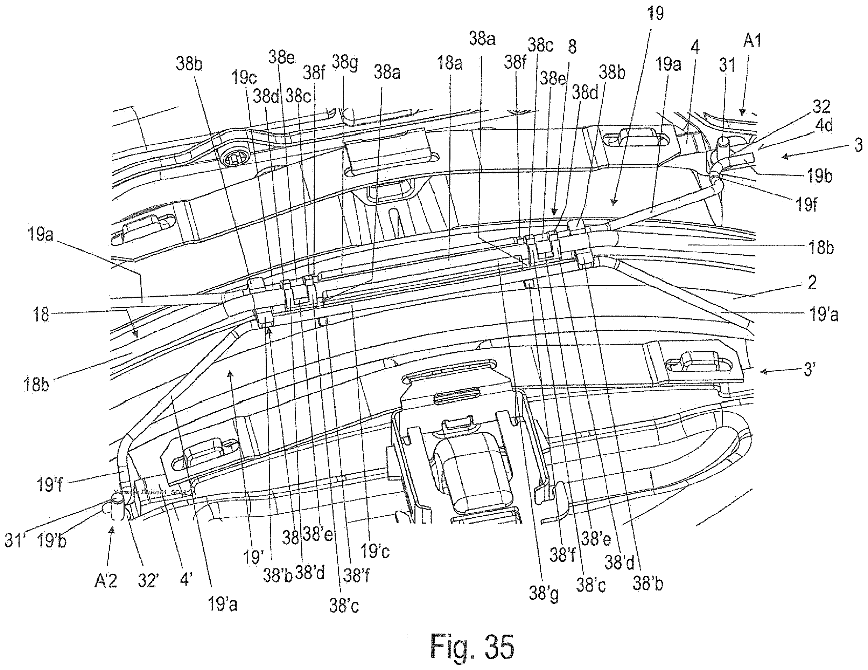

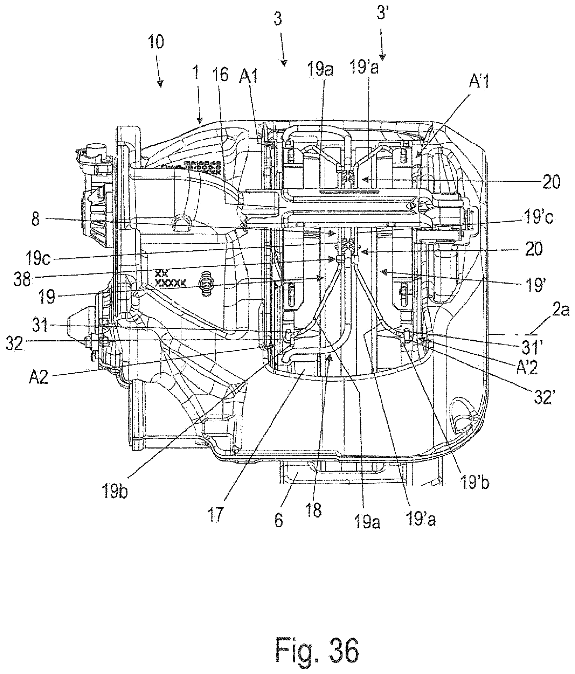

**Figuren 35-36** zeigen schematische Teilansichten der erfindungsgemäßen Scheibenbremse 10 nach Figuren 26-27 mit einer vierten Variante der Spreizeinrichtung 8 und der achten Variante der Verbindungsschnittstelle 20 nach Figur 28.

Die Verbindungsschnittstelle 20 weist hier ein Verbindungselement 38 auf, das ähnlich wie das Verbindungselement 29 (siehe z.B. Figur 28) aufgebaut ist.

Die Federarmpaare der Federeinheiten 19, 19' sind hier nicht die Bremsscheibe 2 übergreifend sondern jeweils auf einer Seite der Bremsscheibe angeordnet.

Hier ist eine Anbindungsmöglichkeit von zwei Federarmen 19a, 19'a, die einmal durchgehend auf der Zuspannseite und einmal durchgehend auf der Sattelrückenseite vorliegen, dargestellt. Die Federarme 19a, 19'a sind über verlängerte Verbindungsabschnitte 19c, 19'c verbunden. Die verlängerten Verbindungsabschnitte 19c, 19'c verlaufen parallel zu und neben Führungsabschnitten 38g, 38'g des Verbindungselementes 38.

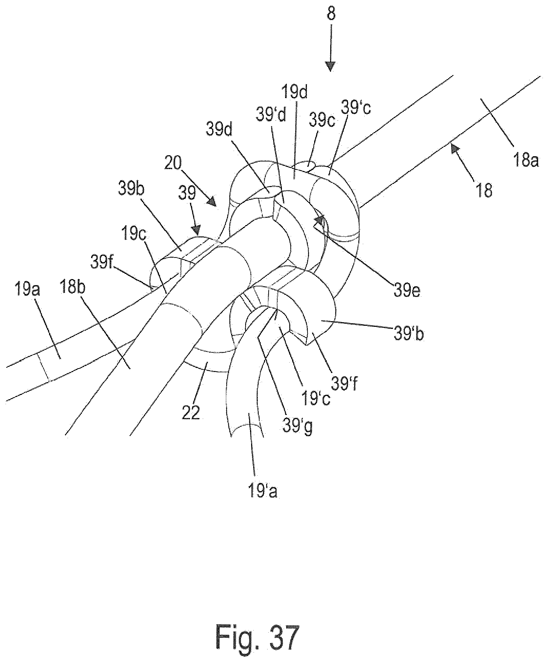

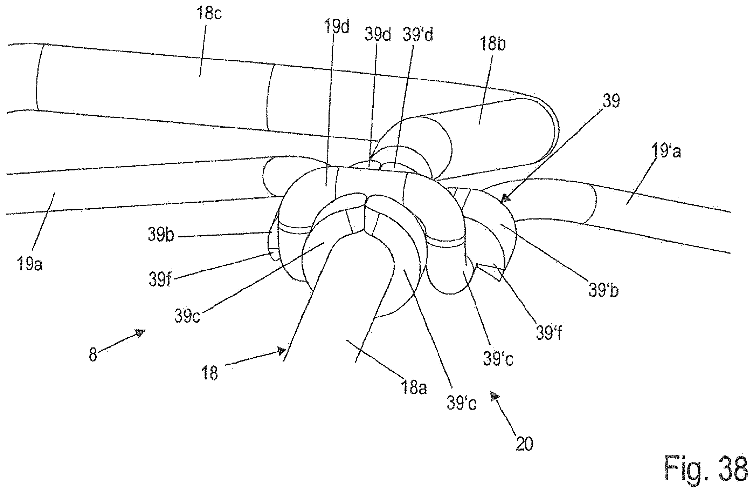

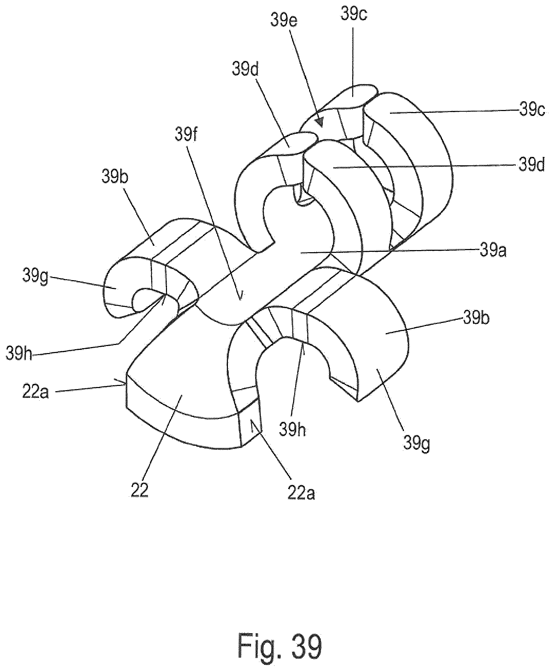

In den **Figuren 37** **und** **38** sind vergrößerte schematische perspektivische Teildarstellungen der Spreizeinrichtung 8 nach Figur 1 mit einer zehnten Variante der Verbindungsschnittstelle 20 dargestellt. **Figur 39** zeigt eine vergrößerte schematische Perspektivansicht der zehnten Variante der Verbindungsschnittstelle der Spreizeinrichtung 8 nach Figuren 37-38 mit einem Verbindungselement 39.

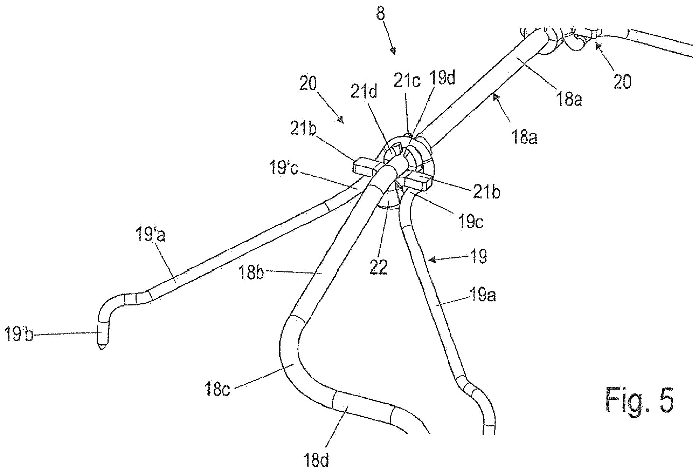

Die zehnte Variante der Verbindungsschnittstelle 20 unterscheidet sich von der ersten Variante der Verbindungsschnittstelle 20 nach den Figuren 5, 6 und 7 in einem variierten Verbindungselement 39, wobei nur einige Abschnitte anders gestaltet sind, wie unten erläutert wird.

Das Verbindungselement 39 umfasst wie das Verbindungselement 21 einen längsverlaufenden Basisabschnitt 39a mit einem Auflageabschnitt 39f, zwei sich gegenüberliegende Flügelabschnitte 39b, 39'b und zwei sich gegenüberliegende Paare von Hülsenabschnitten 39c, 39'c; 39d, 39'd.

Im Unterschied zu dem Verbindungselement 21 sind die beiden die Flügelabschnitte 39b, 39'b konvex mit jeweils einem nach unten weisenden Randabschnitt 39g, 39'g ausgebildet, wobei von den konvexen Flügelabschnitten 39b, 39'b gebildete gerundete Kontaktabschnitte 39h, 39'h an den Unterseiten der konvexen Flügelabschnitte 39b, 39'b angeordnet sind. Die Flügelabschnitte 39b, 39'b mit ihren Kontaktabschnitten 39h, 39'h korrespondieren in ihrer gerundeten Form mit der Außenform der Verbindungsabschnitte 19c, 19'c der Federarme 19a, 19'a.

Der Basisabschnitt 39a ist der runden Außenform des Zentralabschnitts 18a des Anbindungselementes 18 angepasst, wobei der Zentralabschnitt 18a im eingebauten Zustand auf dem Basisabschnitt 39a in dessen Längsrichtung verlaufend angeordnet ist. Dabei liegt der Zentralabschnitt 18a zwischen den Flügelabschnitten 39b, 39'b auf dem Auflageabschnitt 39f des Basisabschnitts 39a und innerhalb der Hülsenabschnitte 39c, 39'c; 39d, 39'd auf dem Basisabschnitt 39a wie im Falle des Verbindungselementes 21 auf.

Die zugehörigen Federeinheit 19, 19' ist auch hier mit dem Verbindungselement 39 derart verbunden, dass die beiden Verbindungsabschnitte 39c, 39'c parallel zu dem Basisabschnitt 39a des Verbindungselementes 39 unter jeweils einem Flügelabschnitt 39b, 39'b verlaufen, wobei die inneren Enden der beiden Verbindungsabschnitte 19c, 19'c jeweils in einem 90°-Bogen nach oben gebogen sind und dann in den Verbindungsbogen 19d übergehen. Der Verbindungsbogen 19d verläuft dabei zwischen den Hülsenabschnitten 39c, 39'c; 39d, 39'd und ist innerhalb von axialen Zwischenräumen 39e, 39'e, die auch als Spalt bezeichnet werden können, angeordnet.

Durch den genannten Spalt verläuft die Federarmeinheit 19, 19' und stützt sich somit in dem Spalt ab, so dass bei einer Verschiebung in Längsrichtung des Zentralabschnitts 18a des Anbindungselementes 18 ein Herausrutschen vermieden wird.

Auf diese Weise ist das Verbindungselement 39 mit der Federeinheit 19, 19' verbunden, wobei gleichzeitig eine Verbindung mit dem Zentralabschnitt 18a des Anbindungselementes 18 gebildet ist, welches sich einerseits parallel zu den Verbindungsabschnitten 19c, 19'c der Federeinheit 19, 19' auf dem Basisabschnitt 39a und andererseits weiter durch die Hülsenabschnitte 39c, 39'c; 39d, 39'd und unterhalb des Verbindungsbogens 19d der Federeinheit 19, 19' hindurch erstreckt.

Das Verbindungselement 39 weist auch den Distanzabschnitt 22 als eine in Längsrichtung des Basisabschnitts 39a nach unten geneigte Lasche auf, deren Seitenabschnitte 22a mit jeweils einem Federarm 19a, 19'a in Kontakt stehen. Auch in dieser Variante liegen die Verbindungsabschnitte 19c, 19'c der Federeinheiten 19, 19' an den Seitenabschnitten 22a des Distanzabschnitts 22 an. Der Distanzabschnitt 22 sorgt im Betrieb für eine seitliche Abstützung der beiden Federarme nach innen, d.h. jeweils zu dem Distanzabschnitt 22 weisend, und definiert somit einen Anlagepunkt der Federarme 19a, 19'a.

Im Unterschied zu dem Verbindungselement 21 der ersten Variante der Verbindungsschnittstelle 20 nach den Figuren 5, 6 und 7 sind die beiden Flügelabschnitt 39b, 39'b, die auch als Flügellaschen bezeichnet werden können, bogenförmig nach unten geneigt und sichern zum Einen ein nach unten gerichtetes Verkippen der Federarme 19a, 19'a und zum Anderen ein Herausrutschen der Federarme 19a, 19'a nach oben.

Bei der Montage wird die Federameinheit 19, 19' unter die Hülsenabschnitte 39c, 39'c; 39d, 39'd eingefädelt und in die beiden seitlich nach unten ragenden Flügelabschnitte 39b, 39'b, die eine Art Laschen bilden, eingeklippst.

Die Belaghaltefedern 7, 7' sind an ihren Enden jeweils mit einer Fase versehen. Diese Fasen weisen jeweils zur Bremsscheibe 2 hin und dienen zur Erleichterung einer Montage und Demontage der Spreizeinrichtung 8, wobei ein Verhaken der Federarme 19a, 19'a an den zur Bremsscheibe 2 weisenden Enden der Belaghaltefedern 7, 7' vermieden werden kann. Diese Fasen sind nicht bezeichnet, aber in den Figuren 1, 21-31, 33, 35-36 deutlich erkennbar.

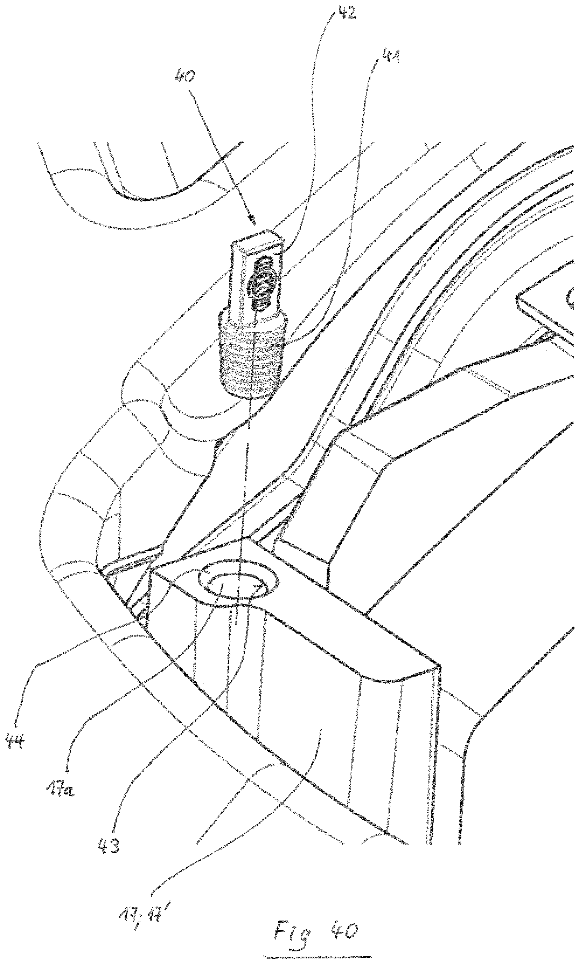

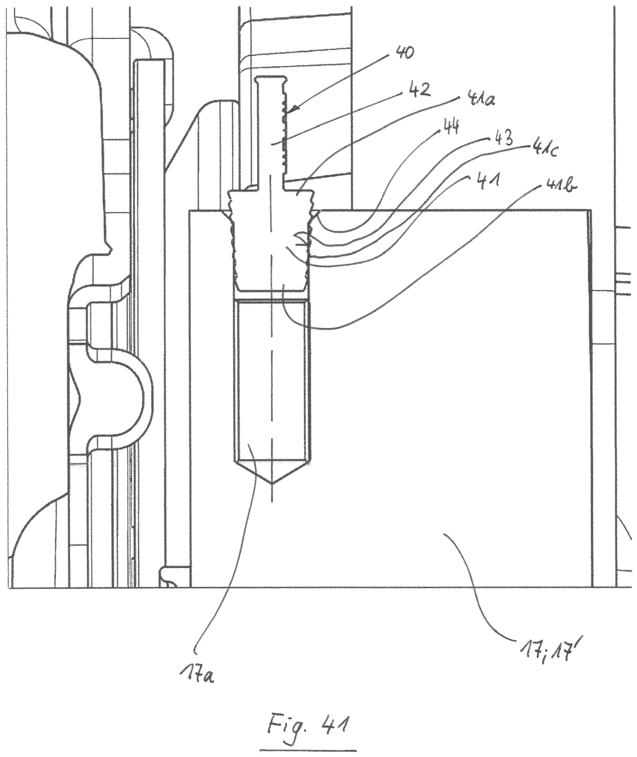

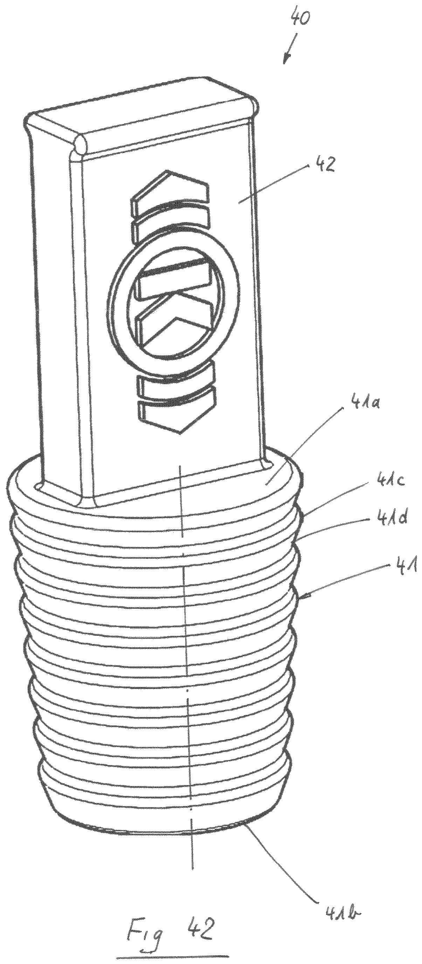

**Figur 40** zeigt eine schematische Perspektivansicht eines Bremsträgerhorns 17, 17' mit einer Aufnahmeöffnung 17a und einem Stopfen 40. In **Figur 41** ist eine schematische Schnittansicht des Bremsträgerhorns 17, 17' mit eingesetztem Stopfen 40 nach Figur 40 gezeigt. **Figur 42** stellt eine vergrößerte schematische Perspektivansicht des Stopfens 40 nach Figur 40 und 41 dar.

Der Stopfen 40 dient zum Verschluss der Aufnahmeöffnungen 17a, wenn die Scheibenbremse 1 für eine spätere Nachrüstung mit einer Spreizeinrichtung 8 vorgesehen ist. In einem solchen Fall kann der Bremsträger 6 mit den jeweils eine Aufnahmeöffnung 17a aufweisenden Bremsträgerhörnern 17, 17' schon eingebaut sein, wobei die unbenutzten Aufnahmeöffnungen 17a durch einen jeweiligen Stopfen 40 verschlossen und somit gegen Verunreinigungen geschützt sind. Die Stopfen 40 können auch bei Wartung und Auswechseln der Spreizeinrichtung 8 für einen vorübergehenden Schutz der Aufnahmeöffnungen 17a verwendet werden.

Der Stopfen 40 weist einen Körper 41 und einen Griff 42 auf. Der Körper 41 ist kegelförmig mit einem oberen Griffabschnitt 41a und einem unteren Endabschnitt 41b ausgebildet, wobei sich der Körper 41 in seiner Längsrichtung von dem Griffabschnitt 41a zu dem Endabschnitt 41b hin verjüngt. Der Körper 41 weist zudem umlaufende Wülste 41c auf, zwischen denen umlaufende Ausnehmungen 41d angeordnet sind. Die Wülste 41c und die Ausnehmungen 41d sind koaxial zu einer Längsachse des Körpers 41 an diesem in seiner Längsrichtung hintereinander angeordnet.

Auf dem Griffabschnitt 41a des Körpers 41 ist der Griff 42 angebracht. Der Griff 42 weist eine quaderförmige Gestalt auf und ist an seinem oberen freien Ende mit wulstförmigen Kanten für eine erleichterte Handhabung versehen. Eine Länge des Griffs 42 entspricht etwa einer Länge des Körpers 41 in Längsrichtung.

Ein mittlerer Durchmesser des Körpers 41 korrespondiert zu dem Innendurchmesser der Aufnahmeöffnungen 17a.

Ein Material des Stopfens 40 ist ein hitzebeständiger Kunststoff. Der Stopfen 40 kann auch einen Metallkern aufweisen, welcher mit einem Kunststoff umspritzt ist, der die Wülste 41c bildet. Die Wülste 41c sind im Wesentlichen elastisch.

Der Stopfen 40 ist, wie Figur 41 zeigt, mit seinem unteren Ende 41b voran in die Aufnahmeöffnung 17a in das Bremsträgerhorn 17, 17' eingesetzt. Dabei ist der Körper 41 zu etwa drei Viertel seiner Länge in der Aufnahmeöffnung 17a aufgenommen. Die elastischen Wülste 17 sind dabei zusammengedrückt, stehen in Kontakt mit einer Innenwand 43 der Aufnahmeöffnung 17a und bilden somit eine Abdichtung der Aufnahmeöffnung 17a gegenüber der Umgebung.

Die Aufnahmeöffnungen 17a sind hier als Sacklöcher ausgebildet und weisen an ihren Oberseite Fasen 44 für eine erleichterte Einfädelung der Befestigungsabschnitte 18e des Anbindungselementes 18 wie der Stopfen 40 auf. Die Aufnahmeöffnungen 17a können auch Durchgangslöcher sein, wobei dann jeweils ein weiterer Stopfen 40 vorgesehen ist.

Die Aufnahmeöffnungen 4c, 4'c der Anbindungsschnittstellen A1, A'1; A2, A'2 sind als Durchgangslöcher oder/und Sacklöcher ausgebildet, wie oben bereits beschrieben. In beiden Fällen ermöglichen die Aufnahmeöffnungen 4c, 4'c den Anbindungsabschnitten 19b, 19'b einen stabilen Sitz.

Die Aufnahmeöffnungen 4c, 4'c der Anbindungsschnittstellen A1, A'1; A2, A'2 können sich z.B. über ein Viertel, ein Drittel, zwei Viertel, zwei Drittel, drei Drittel oder mehr, oder über die gesamte Seitenlänge (als Durchgangsloch) eines Bremsbelags 3, 3' erstrecken. Dabei können die Längen der Anbindungsabschnitte 19b, 19'b mit den Längen der Aufnahmeöffnungen 4c, 4'c korrespondieren. Auf diese Weise wird eine Krafteinleitung der Spreizeinrichtung 8 auf die Bremsbeläge 3, 3' zur Rückstellung ausgeübt, die sich so bis über die ganze Seite der Bremsbeläge 3, 3' erstrecken kann.

In dem Fall, dass die Aufnahmeöffnungen 4c, 4'c der Anbindungsschnittstellen A1, A'1; A2, A'2 als Sacklöcher ausgebildet sind, können die Anbindungsabschnitte 19b, 19'b mit ihren Enden auf dem jeweiligen Sacklochboden in Kontakt stehend aufliegen, wobei die Anbindungsabschnitte 19b, 19'b dann mit ihren umlaufenden Flächen an der jeweiligen Innenwand der zugehörigen Aufnahmeöffnung 4c, 4'c in Kontakt stehen können.

Es ist weiterhin denkbar, dass die Anbindungsabschnitte 19b, 19'b mit Hülsen versehen sind, wobei diese Hülsen jeweils auf einen Anbindungsabschnitt 19b, 19'b aufgeschoben sind. Dies ist nicht dargestellt, aber leicht vorstellbar. Derartige Hülsen können natürlich auch auf die Befestigungsabschnitte 18e des Anbindungselementes 18 aufgeschoben sein.

Die Erfindung wird durch die oben beschriebenen Ausführungsbeispiele nicht eingeschränkt. Sie ist im Rahmen der beigefügten Ansprüche modifizierbar.

### BEZUGSZEICHENLISTE

- 1: Bremssattel
- 2: Bremsscheibe
- 2a: Bremsscheibendrehachse
- 3, 3': Bremsbelag
- 4, 4': Belagträgerplatte
- 4a: Belagseite
- 4b, 4'b: Druckseite
- 4c, 4'c: Aufnahmeöffnung
- 4d, 4'd: Oberseite
- 5, 5': Reibbelag
- 6: Bremsträger
- 7, 7': Belaghaltefeder
- 7a: Federende
- 7b: Langloch
- 8: Spreizeinrichtung
- 9: Öffnung
- 10: Scheibenbremse
- 11: Zuspannabschnitt
- 12: Sattelrücken
- 13: Zugstrebe
- 14, 15: Halteabschnitt
- 16: Belaghaltebügel
- 17, 17': Bremsträgerhorn
- 17a: Aufnahmeöffnung
- 18: Anbindungselement
- 18a: Zentralabschnitt
- 18b, 18c, 18d: Verbindungsabschnitt
- 18e: Befestigungsabschnitt
- 19, 19': Federarmeinheit
- 19a, 19'a: Federarm
- 19b, 19'b: Anbindungsabschnitt
- 19c, 19'c: Verbindungsabschnitt
- 19d: Verbindungsbogen
- 19e, 19'e: Bogenabschnitt
- 19f, 19'f; 19g, 19'g: Verbindungsabschnitt
- 20: Verbindungsschnittstelle
- 21: Verbindungselement
- 21a: Basisabschnitt
- 21b, 21'b: Flügelabschnitt
- 21c, 21'c; 21d, 21'd: Hülsenabschnitt
- 21e, 21'e: Zwischenraum
- 21f: Auflageabschnitt
- 22: Distanzabschnitt
- 22a, 22'a: Seitenabschnitt
- 22b: Ausnehmung
- 23: Verbindungselement
- 23a: Basisabschnitt
- 23b, 23'b: Flügelabschnitt
- 23c: Auflageabschnitt
- 24: Verbindungselement
- 24a: Basisabschnitt
- 24b, 24'b; 24d, 24'd: Flügelabschnitt
- 24c, 24'c; 24e, 24'e: Führungsabschnitt
- 24f, 24'f: Gabelführung
- 25: Stift
- 26: Führungselement
- 26a: Stift
- 26b, 26'b: Scheibenabschnitt
- 27: Tragabschnitt
- 27a, 27'a: Bogenabschnitt
- 28: Verbindungselement
- 28a: Windung
- 29: Verbindungselement
- 29a: Basisabschnitt
- 29b, 29'b: Flügelabschnitt
- 29c, 29'c; 29d, 29'd: Hülsenabschnitt
- 29e, 29'e: Zwischenraum
- 29f, 29'f: Flügelabschnitt
- 29g, 29'g: Führungsabschnitt
- 30, 30': Haltevorsprung
- 31, 31': Zylinderstift
- 32, 32': Absatz
- 33: Führungselement
- 33a: Führungsabschnitt
- 33b: Führungsaufnahme
- 34: Endabschnitt
- 34a: Langloch
- 35: Eckabschnitt
- 35a: Absatz
- 35b: Druckfläche
- 35c: Auflagefläche
- 36: Führungselement
- 36a: Basisabschnitt
- 36b, 36c: Wandabschnitt
- 36d: Auflageabschnitt
- 37: Verbindungselement
- 37a, 37'a; 37b, 37'b: Hülsenabschnitt
- 37c: Zwischenraum
- 37d: Durchführungsöffnung
- 38: Verbindungselement
- 38a: Basisabschnitt
- 38b, 38'b: Flügelabschnitt
- 38c, 38'c; 38d, 38'd: Hülsenabschnitt
- 38e, 38'e: Zwischenraum
- 38f, 38'f: Flügelabschnitt
- 38g, 38'g: Führungsabschnitt
- 39: Verbindungselement
- 39a: Basisabschnitt
- 39b, 39'b: Flügelabschnitt
- 39c, 39'c; 39d, 39'd: Hülsenabschnitt
- 39e, 39'e: Zwischenraum
- 39f: Auflageabschnitt
- 39g, 39'g: Randabschnitt
- 39h, 39'h: Kontaktfläche
- 40: Stopfen
- 41: Körper
- 41a: Griffabschnitt
- 41b: Endabschnitt
- 41c: Wulst
- 41d: Ausnehmung
- 42: Griff
- 43: Innenwand
- 44: Fase
- A1, A'1, A2, A'2: Anbindungsschnittstelle
- AS: Auslaufseite
- ES: Einlaufseite

## Patentansprüche

1. Scheibenbremse (10) für ein Nutzfahrzeug, mit einem eine Bremsscheibe (2) übergreifenden, als Schiebesattel ausgebildeten Bremssattel (1), der an einem ortsfesten Bremsträger (6) befestigt ist und eine zentrale Öffnung (9) über der Bremsscheibe (2) aufweist, zwei im Bremssattel (1) angeordneten, gegensinnig bewegbaren, jeweils eine Belagträgerplatte (4, 4') und einen darauf befestigten Reibbelag (5, 5') aufweisenden Bremsbelägen (3, 3'), von denen ein aktionsseitiger bzw. zuspannseitiger Bremsbelag (3), mittels einer Zuspanneinrichtung über mindestens einen Bremsstempel gegen die Bremsscheibe (2) pressbar ist, sowie mindestens einer Spreizeinrichtung (8), mit welcher der Bremssattel (1) nach einem bremsbedingten Verschieben und Lösen der Bremse rückführbar ist, wobei die Spreizeinrichtung (8) an den sich gegenüberliegenden Bremsbelägen (3, 3') angreifende federnden Federeinheiten (19, 19') aufweist, wobei die Spreizeinrichtung (8) in der zentralen Öffnung (9) angeordnet ist und die Federeinheiten (19, 19') direkt oder indirekt außerhalb der Reibbeläge (5, 5') in mindestens zwei zur Mitte abständig zueinander angeordneten Anbindungsschnittstellen (A1, A'1; A2, A'2) der Bremsbeläge (3, 3') angreifen, wobei die Federeinheiten (19, 19') mit einem ortsfesten Anbindungselement (18) in mindestens einer Verbindungsschnittstelle (20) mit mindestens einem Verbindungselement (21, 23, 24, 26, 28, 29, 38, 39) verbunden sind
**dadurch gekennzeichnet, dass**
das mindestens eine Verbindungselement (21, 23, 24, 26, 28, 29, 38, 39) eine um eine Längsachse eines Zentralabschnitts (18a) des Anbindungselementes (18) verdrehbare Verbindung bildet.

2. Scheibenbremse (10) nach Anspruch 1,
**dadurch gekennzeichnet, dass**
das mindestens eine Verbindungselement (21, 23, 24, 26, 28, 29, 38, 39) eine in Richtung einer Längsachse eines Zentralabschnitts (18a) des Anbindungselementes (18) verschiebbare Verbindung bildet.

3. Scheibenbremse (10) nach einem der Ansprüche 1 bis 2,
**dadurch gekennzeichnet, dass**
das mindestens eine Verbindungselement (39) bogenförmig nach unten geneigte Flügelabschnitte (39b, 39'b) aufweist, in welche mindestens eine Federeinheit (19, 19') eingeklippst ist.

4. Scheibenbremse (10) nach Anspruch 3,
**dadurch gekennzeichnet, dass**
das mindestens eine Verbindungselement (39) mindestens einen Distanzabschnitt (22) als eine in Längsrichtung eines Basisabschnitts (39a) des mindestens einen Verbindungselementes (39) nach unten geneigte Lasche aufweist, wobei Seitenabschnitte (22a, 22'a) des mindestens einen Distanzabschnitts (22) mit einer Federeinheit (19, 19') in Kontakt stehen.

5. Scheibenbremse (10) nach einem der vorhergehenden Ansprüche, **dadurch gekennzeichnet, dass**
das mindestens eine Verbindungselement (21, 23, 24, 26, 29, 38, 39) ein metallisches Stanzbiegeteil ist.

6. Scheibenbremse (10) nach einem der Ansprüche 1 bis 2,
**dadurch gekennzeichnet, dass**
das mindestens eine Verbindungselement (28) Windungen (28a) in einer Art Wicklung umfasst, wobei das Anbindungselement (18) sich durch die Windungen (28a) erstreckt.

7. Scheibenbremse (10) nach Anspruch 6,
**dadurch gekennzeichnet, dass**
die Windungen (28a) des mindestens einen Verbindungselementes (28) Windungen (28a) von Abschnitten von Federarmen (19a, 19'a) der Federeinheit (19, 19') sind.

8. Scheibenbremse (10) nach einem der vorhergehenden Ansprüche, **dadurch gekennzeichnet, dass**
jede Federeinheit (19, 19') ein Paar von Federarmen (19a, 19'a) umfasst, welche mit ihren inneren Enden, die zur Mitte der Öffnung (9) weisen, verbunden sind.

9. Scheibenbremse (10) nach Anspruch 8,
**dadurch gekennzeichnet, dass**
das Paar von Federarmen (19a, 19'a) einstückig ausgebildet ist.

10. Scheibenbremse (10) nach Anspruch 8 oder 9,
**dadurch gekennzeichnet, dass**
die anderen Enden der Federarme (19a, 19'a) eines jeden Paars von Federarmen (19a, 19'a) Anbindungsabschnitte (19b, 19'b) aufweisen, welche in den Anbindungsschnittstellen (A1, A'1; A2, A'2) der Bremsbeläge (3, 3') zusammenwirken.

11. Scheibenbremse (10) nach Anspruch 10,
**dadurch gekennzeichnet, dass**
die Anbindungsschnittstellen (A1, A'1; A2, A'2) an den Belagrückenplatten (4, 4') der Bremsbeläge (3, 3') angeordnet sind.

12. Scheibenbremse (10) nach Anspruch 11,
**dadurch gekennzeichnet, dass**
die Anbindungsschnittstellen (A1, A'1; A2, A'2) Aufnahmeöffnungen (4c, 4'c) aufweisen, welche als Durchgangslöcher oder/und Sacklöcher ausgebildet sind.

13. Scheibenbremse (10) nach Anspruch 11 oder 12,
**dadurch gekennzeichnet, dass**
die Aufnahmeöffnungen (4c, 4'c) als Bohrungen oder/und Langlöcher ausgebildet sind.

14. Scheibenbremse (10) nach einem der Ansprüche 11 bis 13, **dadurch gekennzeichnet, dass**
die Anbindungsschnittstellen (A1, A'1; A2, A'2) Stifte (31) aufweisen.

15. Scheibenbremse (10) nach einem der Ansprüche 11 bis 13,
**dadurch gekennzeichnet, dass**
die Anbindungsschnittstellen (A1, A'1; A2, A'2) Führungselemente (33) aufweisen.

16. Scheibenbremse (10) nach einem der Ansprüche 11 bis 13,
**dadurch gekennzeichnet, dass**
die Anbindungsschnittstellen (A1, A'1; A2, A'2) Absätze (35) mit oder ohne aufgebrachte Führungselemente (36) aufweisen.

17. Scheibenbremse (10) nach einem der Ansprüche 11 bis 13,
**dadurch gekennzeichnet, dass**
die Anbindungsschnittstellen (A1, A'1; A2, A'2) indirekt an den Belagrückenplatten (4, 4') der Bremsbeläge (3, 3') an Belaghaltefedern (7, 7') angeordnet sind.

18. Scheibenbremse (10) nach einem der vorhergehenden Ansprüche,
**dadurch gekennzeichnet, dass**
die Federeinheiten (19, 19') und das ortsfeste Anbindungselement (18) aus einem Drahtmaterial, insbesondere Edelstahl, beispielsweise mit einem kreisrunden Querschnitt ausgebildet sind.

19. Bremsbelagsatz für eine Scheibenbremse (10) nach einem der vorhergehenden Ansprüche, aufweisend einen zuspannseitigen Bremsbelag (3), einen rückenseitigen Bremsbelag (3') und eine Spreizeinrichtung (8) mit Federeinheiten (19, 19'), wobei jede Federeinheit (19, 19') ein Paar von Federarmen (19a, 19'a) umfasst, wobei die Federeinheiten (19, 19') mit einem Anbindungselement (18) in mindestens einer Verbindungsschnittstelle (20) mit mindestens einem Verbindungselement (21, 23, 24, 26, 28, 29, 38, 39) verbunden sind **dadurch gekennzeichnet, dass**
das mindestens eine Verbindungselement (21, 23, 24, 26, 28, 29, 38, 39) eine um eine Längsachse eines Zentralabschnitts (18a) des Anbindungselementes (18) verdrehbare Verbindung bildet,
und dass an den Belagrückenplatten (4, 4') der Bremsbeläge (3, 3') Anbindungsschnittstellen (A1, A'1; A2, A'2) zur Zusammenwirkung mit Anbindungsabschnitten (19b, 19'b) von Enden der Federarme (19a, 19'a) eines jeden Paars von Federarmen (19a, 19'a) angeordnet sind.

20. Bremsbelagsatz (10) nach Anspruch 19, **dadurch gekennzeichnet, dass**
die Anbindungsschnittstellen (A1, A'1; A2, A'2) Aufnahmeöffnungen (4c, 4'c) aufweisen, welche als Durchgangslöcher oder/und Sacklöcher ausgebildet sind.

21. Bremsbelagsatz (10) nach Anspruch 19 oder 20,
**dadurch gekennzeichnet, dass**
die Aufnahmeöffnungen (4c, 4'c) als Bohrungen oder/und Langlöcher ausgebildet sind.

22. Bremsbelagsatz (10) nach einem der Ansprüche 19 bis 21,
**dadurch gekennzeichnet, dass**
die Anbindungsschnittstellen (A1, A'1; A2, A'2) Stifte (31) aufweisen.

23. Bremsbelagsatz (10) nach einem der Ansprüche 19 bis 22, **dadurch gekennzeichnet, dass**
die Anbindungsschnittstellen (A1, A'1; A2, A'2) Führungselemente (33) aufweisen.

24. Bremsbelagsatz (10) nach einem der Ansprüche 19 bis 23,
**dadurch gekennzeichnet, dass**
die Anbindungsschnittstellen (A1, A'1; A2, A'2) Absätze (35) mit oder ohne aufgebrachte Führungselemente (36) aufweisen.

25. Bremsbelagsatz (10) nach einem der Ansprüche 19 bis 24,
**dadurch gekennzeichnet, dass**
die Anbindungsschnittstellen (A1, A'1; A2, A'2) indirekt an den Belagrückenplatten (4, 4') der Bremsbeläge (3, 3') an Belaghaltefedern (7, 7') angeordnet sind.

26. Scheibenbremse (10) nach einem der Ansprüche 1 bis 18
**dadurch gekennzeichnet, dass**
die Bremsbeläge (3, 3') jeweils mindestens eine Belaghaltefeder (7, 7') aufweisen, welche an ihren Enden jeweils mit einer Fase versehen ist.

27. Scheibenbremse (10) nach einem der Ansprüche 1 bis 18 oder nach Anspruch 26,
**dadurch gekennzeichnet, dass**
die Aufnahmeöffnungen (17a) der Bremsträgerhörnern (17, 17') jeweils mit einem Stopfen (40) verschlossen sind, wenn eine Spreizeinrichtung (8) nicht vorhanden oder ausgebaut ist.

28. Scheibenbremse (10) nach Anspruch 27,
**dadurch gekennzeichnet, dass**
der Stopfen (40) einen Körper (41) aufweist, welcher kegelförmig mit einem Griffabschnitt (41a) und einem Endabschnitt (41b) ausgebildet ist.

29. Scheibenbremse (10) nach Anspruch 28,
**dadurch gekennzeichnet, dass**
der Körper (41) umlaufende Wülste (41c) aufweist, zwischen denen umlaufende Ausnehmungen (41d) angeordnet sind.

30. Scheibenbremse (10) nach Anspruch 29,
**dadurch gekennzeichnet, dass**
der Griffabschnitt (41a) des Körpers (41) mit einem Griff (42) verbunden ist.

## Claims

1. Disc brake (10) for a utility vehicle, having a brake caliper (1), in the form of a floating caliper, spanning a brake disc (2), which brake caliper is fastened at a stationary brake carrier (6) and has a central opening (9) above the brake disc (2), two oppositely movable brake linings (3, 3') arranged in the brake caliper (1) and each having one lining carrier plate (4, 4') and one friction lining (5, 5') fixed thereon, of which one action-side or supply-side brake lining (3) can be pressed by means of a clamping apparatus via at least one brake piston against the brake disc (2), and at least one spreading apparatus (8) with which the brake caliper (1) can be returned after a displacing and releasing of the brake in the case of a braking procedure, wherein the spreading apparatus (8) has resilient spring units (19, 19') which engage with the oppositely-situated brake linings (3, 3'), wherein the spreading apparatus (8) is arranged in the central opening (9) and the spring units (19, 19') engage directly or indirectly outside the friction linings (5, 5') in at least two joining interfaces (A1, A'1; A2, A'2) of the brake linings (3, 3') which are arranged spaced in the middle from one another, wherein the spring units (19, 19') are connected with a stationary joining element (18) in at least one connecting interface (20) with at least one connecting element (21, 23, 24, 26, 28, 29, 38, 39),
**characterised in that**
the at least one connecting element (21, 23, 24, 26, 28, 29, 38, 39) forms a connection which can be twisted around a longitudinal axis of a central portion (18a) of the joining element (18).

2. Disc brake (10) according to claim 1,
**characterised in that**
the at least one connecting element (21, 23, 24, 26, 28, 29, 38, 39) forms a connection which can be displaced in the direction of a longitudinal axis of a central portion (18a) of the joining element (18).

3. Disc brake (10) according to any of claims 1 to 2,
**characterised in that**
the at least one connecting element (39) has wing portions (39b, 39'b) inclined in an arcuate manner downward, into which at least one spring unit (19, 19') is clipped.

4. Disc brake (10) according to claim 3,
**characterised in that**
the at least one connecting element (39) has at least one distance portion (22) in the form of a tab inclined downwards in longitudinal direction of a basis portion (39a) of the at least one connecting element (39), wherein side portions (22a, 22'a) of the at least one distance portion (22) are in contact with a spring unit (19, 19').

5. Disc brake (10) according to any of the preceding claims,
**characterised in that**
the at least one connecting element (21, 23, 24, 26, 29, 38, 39) is a metallic stamped and bent part.

6. Disc brake (10) according to any of claims 1 to 2,
**characterised in that**
the at least one connecting element (28) comprises windings (28a) in a type of coil, wherein the joining element (18) extends through the windings (28a).

7. Disc brake (10) according to claim 6,
**characterised in that**
the windings (28a) of the at least one connecting element (28) are windings (28a) from portions of spring arms (19a, 19'a) of the spring unit (19, 19').

8. Disc brake (10) according to any of the preceding claims,
**characterised in that**
each spring unit (19, 19') comprises a pair of spring arms (19a, 19'a) which are connected with their inner ends, which point to the middle of the opening (9).

9. Disc brake (10) according to claim 8,
**characterised in that**
the pair of spring arms (19a, 19'a) is formed integrally.

10. Disc brake (10) according to claim 8 or 9,
**characterised in that**
the other ends of the spring arms (19a, 19'a) of each pair of spring arms (19a, 19'a) have joining portions (19b, 19'b) which interact in the joining interfaces (A1, A'1; A2, A'2) of the brake linings (3, 3').

11. Disc brake (10) according to claim 10,
**characterised in that**
the joining interfaces (A1, A'1; A2, A'2) are arranged at the lining back plates (4, 4') of the brake linings (3, 3').

12. Disc brake (10) according to claim 11,
**characterised in that**
the joining interfaces (A1, A'1; A2, A'2) have receiving openings (4c, 4'c) which are formed as through holes and/or blind holes.

13. Disc brake (10) according to any of claims 11 or 12,
**characterised in that**
the receiving openings (4c, 4'c) are formed as bores and/or longitudinal holes.

14. Disc brake (10) according to any of claims 11 to 13,
**characterised in that**
the joining interfaces (A1, A'1; A2, A'2) have pins (31).

15. Disc brake (10) according to any of claims 11 to 13,
**characterised in that**
the joining interfaces (A1, A'1; A2, A'2) have guiding elements (33).

16. Disc brake (10) according to any of claims 11 to 13,
**characterised in that**
the joining interfaces (A1, A'1; A2, A'2) have heels (35) with or without guiding elements (36) mounted thereon.

17. Disc brake (10) according to any of claims 11 to 13,
**characterised in that**
the joining interfaces (A1, A'1; A2, A'2) are arranged indirectly at the lining back plates (4, 4') of the brake linings (3, 3') on lining holder springs (7, 7').

18. Disc brake (10) according to any of the preceding claims,
**characterised in that**
the spring units (19, 19') and the stationary joining element (18) are formed from a wire material, particular stainless steel, for example with a circular cross-section.

19. Brake lining set for a disc brake (10) according to any of the preceding claims, having a supply-side brake lining (3), a rear-side brake lining (3') and a spreading apparatus (8) having spring units (19, 19'), wherein each spring unit (19, 19') comprises a pair of spring arms (19a, 19'a), wherein the spring units (19, 19') are connected with a joining element (18) in at least one connecting interface (20) with at least one connecting element (21, 23, 24, 26, 28, 29, 38, 39)
**characterised in that**
the at least one connecting element (21, 23, 24, 26, 28, 29, 38, 39) forms a connection which can be twisted around a longitudinal axis of a central portion (18a) of the joining element (18),
and **in that** joining interfaces (A1, A'1; A2, A'2) are arranged at the lining back plates (4, 4') of the brake linings (3, 3') for interaction with joining portions (19b, 19'b) of ends of the spring arms (19a, 19'a) of each single pair of spring arms (19a, 19'a).

20. Brake lining set (10) according to claim 19,
**characterised in that**
the joining interfaces (A1, A'1; A2, A'2) have receiving openings (4c, 4'c) which are formed as through holes and/or blind holes.

21. Brake lining set (10) according to claim 19 or 20,
**characterised in that**
the receiving openings (4c, 4'c) are formed as bores and/or longitudinal holes.

22. Brake lining set (10) according to any of claims 19 to 21,
**characterised in that**
the joining interfaces (A1, A'1; A2, A'2) have pins (31).

23. Brake lining set (10) according to any of claims 19 to 22,
**characterised in that**
the joining interfaces (A1, A'1; A2, A'2) have guiding elements (33).

24. Brake lining set (10) according to any of claims 19 to 23,
**characterised in that**
the joining interfaces (A1, A'1; A2, A'2) have heels (35) with or without guiding elements (36) mounted thereon.

25. Brake lining set (10) according to any of claims 19 to 24,
**characterised in that**
the joining interfaces (A1, A'1; A2, A'2) are arranged indirectly at the lining back plates (4, 4') of the brake linings (3, 3') on lining holder springs (7, 7').

26. Disc brake (10) according to any of claims 1 to 18,
**characterised in that**
the brake linings (3, 3') each have at least one lining holder spring (7, 7') which is equipped at each of its ends with a bevel.

27. Disc brake (10) according to any of claims 1 to 18 or according to claim 26,
**characterised in that**
the receiving openings (17a) of the brake carrier horns (17, 17") are closed in each case with a stopper (40) when a spreading apparatus (8) is not present or has been removed.

28. Disc brake (10) according to claim 27,
**characterised in that**
the stopper (40) has a body (41) which is conical in shape with a handle portion (41a) and an end portion (41b).

29. Disc brake (10) according to claim 28,
**characterised in that**
the body (41) has peripheral beads (41c) between which are arranged peripheral cutouts (41d).

30. Disc brake (10) according to claim 29,
**characterised in that**
the handle portion (41a) of the body (41) is connected to a handle (42).

## Revendications

1. Frein à disque (10) pour un véhicule utilitaire, avec un étrier de frein (1) réalisé en tant qu'étrier coulissant se chevauchant avec un disque de frein (2), étrier de frein qui est fixé à un support de frein fixe (6) et présente une ouverture centrale (9) au-dessus du disque de frein (2), deux garnitures de frein (3, 3') présentant respectivement une plaque de support de garniture (4, 4') et une garniture de friction (5, 5') fixée sur celle-ci, mobiles en sens contraire et disposées dans l'étrier de frein (1), garnitures parmi lesquelles une garniture (3) côté action ou côté serrage peut être appuyée contre le disque de frein (2) au moyen d'un appareil de serrage via au moins un tampon de freinage, ainsi qu'au moins un appareil d'écartement (8) avec lequel l'étrier de frein (1) peut être ramené après un déplacement soumis au freinage et un déclenchement des freins, dans lequel l'appareil d'écartement (8) présente des unités formant ressort élastiques (19, 19') s'engageant au niveau des garnitures de frein opposées (3, 3'), dans lequel l'appareil d'écartement (8) est disposé dans l'ouverture centrale (9) et les unités formant ressort (19, 19') s'engagent directement ou indirectement à l'extérieur des garnitures de friction (5, 5') dans au moins deux interfaces de raccord (A1, A'1 ; A2, A'2) des garnitures de frein (3, 3') à distance du centre, dans lequel les unités formant ressort (19, 19') sont reliées à au moins un élément de liaison (21, 23, 24, 26, 28, 29, 38, 39) avec un élément de raccord fixe (18) dans au moins une interface de liaison (20),
**caractérisé en ce que**
l'au moins un élément de liaison (21, 23, 24, 26, 28, 29, 38, 39) forme une liaison pouvant tourner autour d'un axe longitudinal d'une section centrale (18a) de l'élément de raccord (18).

2. Frein à disque (10) selon la revendication 1,
**caractérisé en ce que**
l'au moins un élément de liaison (21, 23, 24, 26, 28, 29, 38, 39) forme une liaison déplaçable dans la direction d'un axe longitudinal d'une section centrale (18a) de l'élément de raccord (18).

3. Frein à disque (10) selon l'une quelconque des revendications 1 à 2,
**caractérisé en ce que**
l'au moins un élément de liaison (39) présente des sections d'ailette en forme d'arc inclinées vers le bas (39b, 39'b) dans lesquelles au moins une unité formant ressort (19, 19') est emboîtée.

4. Frein à disque (10) selon la revendication 3,
**caractérisé en ce que**
l'au moins un élément de liaison (39) présente au moins une section d'espacement (22) en tant que languette inclinée vers le bas dans la direction longitudinale d'une section de base (39a) de l'au moins un élément de liaison (39), dans lequel des sections latérales (22a, 22'a) de l'au moins une section d'espacement (22) sont en contact avec une unité formant ressort (19, 19').

5. Frein à disque (10) selon l'une quelconque des revendications précédentes,
**caractérisé en ce que**
l'au moins un élément de liaison (21, 23, 24, 26, 29, 38, 39) est une pièce métallique emboutie et pliée.

6. Frein à disque (10) selon l'une quelconque des revendications 1 à 2,
**caractérisé en ce que**
l'au moins un élément de liaison (28) comprend des enroulements (28a) d'un type d'enroulement, dans lequel l'élément de liaison (18) s'étend à travers les enroulements (28a).

7. Frein à disque (10) selon la revendication 6,
**caractérisé en ce que**
les enroulements (28a) de l'au moins un élément de liaison (28) sont des enroulements (28a) de sections de bras de ressort (19a, 19'a) de l'unité formant ressort (19, 19').

8. Frein à disque (10) selon l'une quelconque des revendications précédentes, **caractérisé en ce que**
chaque unité formant ressort (19, 19') comprend une paire de bras de ressort (19a, 19'a) qui sont reliés avec leurs extrémités internes qui pointent vers le centre de l'ouverture (9).

9. Frein à disque (10) selon la revendication 8,
**caractérisé en ce que**
la paire de bras de ressort (19a, 19'a) est réalisée d'un seul tenant.

10. Frein à disque (10) selon la revendication 8 ou 9,
**caractérisé en ce que**
les autres extrémités des bras de ressort (19a, 19'a) de chaque paire de bras de ressort (19a, 19'a) présentent des sections de raccord (19b, 19'b) qui coopèrent dans les interfaces de raccord (A1, A'1 ; A2, A'2) des garnitures de frein (3, 3').

11. Frein à disque (10) selon la revendication 10,
**caractérisé en ce que**
les interfaces de raccord (A1, A'1 ; A2, A'2) sont disposées au niveau des plaques arrière de garniture (4, 4') des garnitures de frein (3, 3').

12. Frein à disque (10) selon la revendication 11,
**caractérisé en ce que**
les interfaces de raccord (A1, A'1 ; A2, A'2) présentent des ouvertures de réception (4c, 4'c) qui sont réalisées en tant que trous traversants et/ou trous borgnes.

13. Frein à disque (10) selon la revendication 11 ou 12,
**caractérisé en ce que**
les ouvertures de réception (4c, 4'c) sont réalisées en tant qu'alésages ou/et trous oblongs.

14. Frein à disque (10) selon l'une quelconque des revendications 11 à 13, **caractérisé en ce que**
les interfaces de raccord (A1, A'1 ; A2, A'2) présentent des broches (31).

15. Frein à disque (10) selon l'une quelconque des revendications 11 à 13,
**caractérisé en ce que**
les interfaces de raccord (A1, A'1 ; A2, A'2) présentent des éléments de guidage (33).

16. Frein à disque (10) selon l'une quelconque des revendications 11 à 13,
**caractérisé en ce que**
les interfaces de raccord (A1, A'1 ; A2, A'2) présentent des épaulements (35) avec ou sans éléments de guidage (36) appliqués.

17. Frein à disque (10) selon l'une quelconque des revendications 11 à 13,
**caractérisé en ce que**
les interfaces de raccord (A1, A'1 ; A2, A'2) sont disposées indirectement au niveau de ressorts de support de garniture (7, 7') au niveau des plaques arrière de garniture (4, 4') des garnitures de frein (3, 3').

18. Frein à disque (10) selon l'une quelconque des revendications précédentes, **caractérisé en ce que**
les unités formant ressort (19, 19') et l'élément de raccord fixe (18) sont réalisés en matériau en fil, en particulier en acier inoxydable, par exemple avec une section transversale circulaire.

19. Jeu de garnitures de frein pour un frein à disque (10) selon l'une quelconque des revendications précédentes, présentant une garniture de frein côté serrage (3), une garniture de frein arrière (3') et un dispositif d'écartement (8) avec des unités formant ressort (19, 19'), dans lequel chaque unité formant ressort (19, 19') comprend une paire de bras de ressort (19a, 19'a), dans lequel les unités formant ressort (19, 19') avec un élément de raccord (18) dans au moins une interface de liaison (20) sont reliées à au moins un élément de raccord (21, 23, 24, 26, 28, 29, 38, 39),
**caractérisé en ce que**
l'au moins un élément de liaison (21, 23, 24, 26, 28, 29, 38, 39) forme une liaison pouvant tourner autour d'un axe longitudinal d'une section centrale (18a) de l'élément de raccord (18),
et **en ce que**, au niveau des plaques arrière de garniture (4, 4') des garnitures de frein (3, 3'), des interfaces de raccord (A1, A'1 ; A2, A'2) sont disposées pour coopérer avec des sections de raccord (19b, 19'b) d'extrémités des bras de ressort (19a, 19'a) de chaque paire de bras de ressort (19a, 19'a).

20. Jeu de garnitures de frein (10) selon la revendication 19,
**caractérisé en ce que**
les interfaces de raccord (A1, A'1 ; A2, A'2) présentent des ouvertures de réception (4c, 4'c) qui sont réalisées en tant que trous traversants et/ou trous borgnes.

21. Jeu de garnitures de frein (10) selon la revendication 19 ou 20,
**caractérisé en ce que**
les ouvertures de réception (4c, 4'c) sont réalisées en tant qu'alésages ou/et trous oblongs.

22. Jeu de garnitures de frein (10) selon l'une quelconque des revendications 19 à 21, **caractérisé en ce que**
les interfaces de raccord (A1, A'1 ; A2, A'2) présentent des broches (31).

23. Jeu de garnitures de frein (10) selon l'une quelconque des revendications 19 à 22, **caractérisé en ce que**
les interfaces de raccord (A1, A'1 ; A2, A'2) présentent des éléments de guidage (33).

24. Jeu de garnitures de frein (10) selon l'une quelconque des revendications 19 à 23, **caractérisé en ce que**
les interfaces de raccord (A1, A'1 ; A2, A'2) présentent des épaulements (35) avec ou sans éléments de guidage (36) appliqués.

25. Jeu de garnitures de frein (10) selon l'une quelconque des revendications 19 à 24, **caractérisé en ce que**
les interfaces de raccord (A1, A'1 ; A2, A'2) sont disposées indirectement au niveau de ressorts de support de garniture (7, 7') au niveau des plaques arrière de garniture (4, 4') des garnitures de frein (3, 3').

26. Frein à disque (10) selon l'une quelconque des revendications 1 à 18,
**caractérisé en ce que**
les garnitures de frein (3, 3') présentent respectivement au moins un ressort de support de garniture (7, 7') qui est respectivement doté d'une fibre au niveau de ses extrémités.

27. Frein à disque (10) selon l'une quelconque des revendications 1 à 18 ou selon la revendication 26,
**caractérisé en ce que**
les ouvertures de réception (17a) des cornes de support de frein (17, 17') sont fermées respectivement avec un obturateur (40) si un appareil d'écartement (8) n'est pas présent ou a été désinstallé.

28. Frein à disque (10) selon la revendication 27,
**caractérisé en ce que**
l'obturateur (40) présente un corps (41) qui est réalisé de manière conique avec une section de préhension (41a) et une section d'extrémité (41b).

29. Frein à disque (10) selon la revendication 28,
**caractérisé en ce que**
le corps (41) présente des bourrelets périphériques (41c) entre lesquels sont disposées des cavités périphériques (41d).

30. Frein à disque (10) selon la revendication 29,
**caractérisé en ce que**
la section de préhension (41a) du corps (41) est reliée à une poignée (42).
